(19) **Europäisches Patentamt / European Patent Office / Office européen des brevets**

(11) **EP 2 152 037 B1**

(12) **EUROPEAN PATENT SPECIFICATION**

(45) Date of publication and mention
of the grant of the patent:
**20.11.2013 Bulletin 2013/47**

(51) Int Cl.:
***H04W 36/10*** *(2009.01)*

(21) Application number: **09163007.9**

(22) Date of filing: **17.06.2009**

(54) **Radio network control apparatus**

Funknetzsteuervorrichtung

Appareil de contrôle de réseau radio

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **07.08.2008 JP 2008203699**

(43) Date of publication of application:
**10.02.2010 Bulletin 2010/06**

(73) Proprietor: **Fujitsu Limited
Kawasaki-shi, Kanagawa 211-8588 (JP)**

(72) Inventor: **Iwamoto, Hideo
Kanagawa 211-8588 (JP)**

(74) Representative: **Stebbing, Timothy Charles
Haseltine Lake LLP
Lincoln House, 5th Floor
300 High Holborn
London WC1V 7JH (GB)**

(56) References cited:
**EP-A1- 1 575 223     WO-A1-2005/125246
GB-A- 2 436 415      JP-A- 2007 243 312
US-A1- 2003 112 788**

**Description**

The present invention relates to a radio network control apparatus that acquires channel identifiers.

Radio Network Controllers (RNCs) in a radio communications system support handover (HO) of a mobile station, including soft handover (SHO). In the process of soft handover, the source RNC (called "anchor RNC") notifies the destination RNC (called "drift RNC") of a channel identifier (CID) to establish a dedicated transport channel at both ends. The ATM Adaptation Layer (AAL) Type 2 specifications provide a set of messages for the purpose of signaling between RNCs. For example, the anchor RNC sends an Establish Request (ERQ) message to notify the drift RNC of which CID value to use. To indicate acknowledgment of the specified CID, the drift RNC sends an Establishment Confirm (ECF) message back to the anchor RNC. The drift RNC, however, may not always be able to accept the CID specified by the anchor RNC. If this is the case, the drift RNC returns a Release Confirm (RLC) message, instead of an ECF message, to the anchor RNC. The same procedure applies to the case of adding dedicated transport channels during software handover between RNCs.

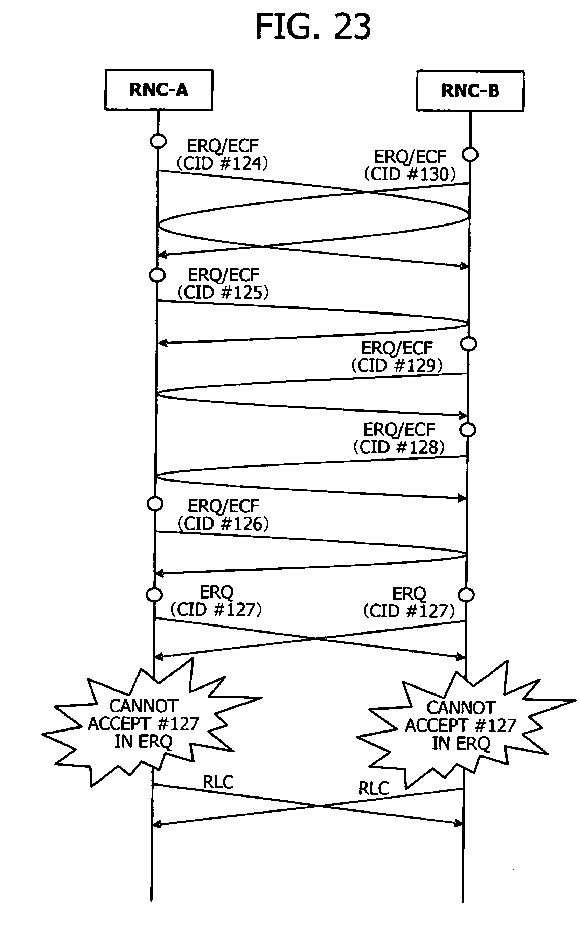

FIG. 23 illustrates an example of a CID notification sequence. The white circles represent occurrence of CID allocation trigger events in an anchor RNC. The notation "ERQ/ECF" means transmission of ERQ from anchor RNC to drift RNC and a consequent ECF response from the drift RNC to the anchor RNC.

Suppose, for example, that one RNC (RNC-A) has selected CID #124 as a result of its CID allocation trigger event, as illustrated in FIG. 23. As anchor RNC, RNC-A sends an ERQ message to notify another RNC (RNC-B) of CID #124 and thus receives an ECF message from RNC-B now acting as drift RNC. Then suppose that RNC-B has selected CID #130 in response to its own CID allocation trigger event. RNC-B sends an ERQ message to notify RNC-A of that CID #130 and thus receives an ECF message from RNC-A acting as drift RNC.

RNC-A acts as anchor RNC to handle subsequent CID allocation trigger events in the same way as described above. That is, RNC-A selects a free CID on an ascending round robin basis and sends it to drift RNC-B. RNC-B also serves as anchor RNC in the same way as described above. Each time a new CID allocation trigger event arises, RNC-B selects a free CID on a descending round robin basis and sends it to drift RNC-A.

Drift RNC is supposed to send an ECF message back to anchor RNC when the specified CID is acceptable for the drift RNC. In the case where the CID is not acceptable, the drift RNC returns a Release Confirm (RLC) message to the anchor RNC. To reduce the probability of selecting each other's CIDs, those two RNCs may be configured to hunt CIDs in opposite directions. For example, one RNC selects CIDs by using an ascending round robin algorithm, and the other RNC selects CIDs by using a descending round robin algorithm.

There is still a chance, however, that the two RNCs will select the same CID value and send ERQ messages substantially at the same time. If this happens, the RNCs have no other choice but to reject each other's ERQ message, meaning that both RNCs fail to acquire CIDs.

Referring to the example sequence of FIG. 23, suppose that both RNC-A and RNC-B have selected CID #127 in response to their respective CID allocation trigger events. RNC-A and RNC-B then transmit ERQ messages to each other, as illustrated in FIG. 23. Neither of the two RNCs can accept the specified CID #217 because they have chosen the very CID #217 for their own use.

As an example of techniques for avoiding conflict in resource acquisition, Japanese Laid-open Patent Publication No. 6-141086 proposes a method of assigning priority to bidirectional trunks between switches. Besides allowing a switch to specify which trunk will have priority, the proposed method automatically corrects priority setting in the switch so as to reduce the chances of conflict with its peer switch.

As another example, there is a telephone exchange system that controls the calls by using call control tasks. For example, Japanese Laid-open Patent Publication No. 6-315035 315035 proposes a method of hunting call control tasks in response to task hunt requests from call originators or call receivers with different priorities. This method manages vacancies of call control tasks while achieving exclusive control.

JP2007/243312A discloses a node and an CID (channel identifier) allocating method in the node which can flexibly perform CID allocation while avoiding competition. In allocating a CID in two opposite nodes connected to a network, the value of a CID to be allocated next is transmitted to the opposite side node, and a CID in this node and a subsequent CID are decided in a CID deciding section, in addition to the value of CID to be allocated next time which is received in a receiver and transmitted from the opposite side node and an already allocated CID

In view of the above, it is desirable to provide a radio network control apparatus that can avoid conflict with its peer apparatus in the process of acquiring channel identifiers.

According to an embodiment of an aspect of the invention, there is provided a radio network control apparatus adapted to be linked with a peer apparatus thereof to control radio base stations. This radio network control apparatus includes the following elements: a free channel counting unit to count the number of free channel identifiers in a range between a last-used channel identifier of the radio network control apparatus and that of the peer apparatus; and a channel identifier acquiring unit to select a free channel identifier, based on the number of free channel identifiers counted by the free channel counting unit.

Reference is made, by way of example only, to the accompanying drawings in which:

FIG. 1 illustrates a radio network control apparatus;
FIG. 2 illustrates an example of a radio communications system according to a first embodiment;
FIG. 3 is a block diagram of an RNC included in the system of FIG. 2;
FIG. 4 illustrates an example data structure of configuration data memory;
FIG. 5 illustrates an example data structure of CID memory;
FIG. 6 is a first sequence diagram illustrating operation of RNCs;
FIG. 7 illustrates a part of a latest CID status list;
FIG. 8 is a second sequence diagram illustrating operation of RNCs;
FIG. 9 illustrates a part of a latest CID status list;
FIG. 10 is a flowchart illustrating operation of drift RNC;
FIG. 11 is a flowchart illustrating operation of anchor RNC;
FIG. 12 is a first sequence diagram illustrating operation of RNCs according to a second embodiment;
FIG. 13 illustrates a part of a remote last CID status list;
FIG. 14 is a second sequence diagram illustrating operation of RNCs according to the second embodiment;
FIG. 15 illustrates a part of a latest CID status list;
FIG. 16 is a third sequence diagram illustrating operation of RNCs according to the second embodiment;
FIG. 17 illustrates a part of a remote last CID status list;
FIG. 18 is a fourth sequence diagram illustrating operation of RNCs according to the second embodiment;
FIG. 19 illustrates a part of a latest CID status list;
FIG. 20 is a flowchart describing operation of anchor RNC;
FIGS. 21 and 22 are another flowchart describing operation of anchor RNC; and
FIG. 23 illustrates an example of a CID notification sequence.

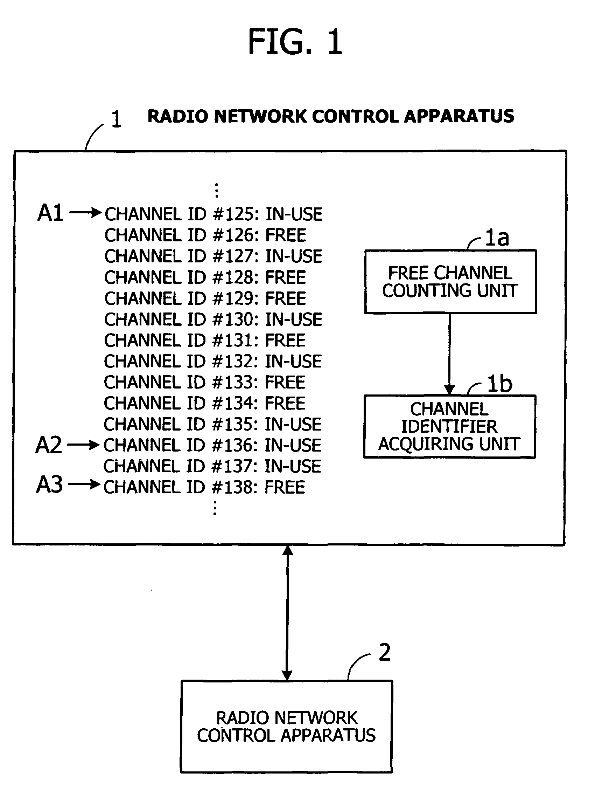

FIG. 1 illustrates a radio network control apparatus 1, which is linked with its peer radio network control apparatus 2. The radio network control apparatus 1 and its peer radio network control apparatus 2 communicate with each other, one acting as anchor RNC and the other acting as drift RNC. The two radio network control apparatuses 1 and 2 play either role depending on the context.
Listed in the box representing the radio network control apparatus 1 are channel identifiers (IDs) and their individual usage status. Those channel identifiers are shared by the two radio network control apparatuses 1 and 2. The illustrated usage status list of channel identifiers is stored in a storage device (e.g., memory) and updated each time the radio network control apparatus 1 or the peer radio network control apparatus 2 acquires or releases a specific channel identifier. It is assumed that the radio network control apparatus 1 selects channel identifiers on an ascending round-robin basis, while its peer radio network control apparatus 2 selects channel identifiers on a descending round-robin basis. The usage status of each channel identifier takes a value of, for example, "FREE" or "IN-USE" as can be seen in FIG. 1. The value "FREE" indicates that the corresponding channel identifier is not currently used and thus available for acquisition by the radio network control apparatuses 1 and 2. The value "IN-USE," on the other hand, indicates that the corresponding channel identifier has been acquired and not yet been released.
The radio network control apparatus 1 includes a free channel counting unit 1a and a channel identifier acquiring unit 1b. The free channel counting unit 1a counts the number of free channel identifiers remaining between a channel identifier acquired by the radio network control apparatus 1 and a channel identifier acquired by the peer radio network control apparatus 2.
Suppose, for example, that channel identifier #125 is what the radio network control apparatus 1 has put into use most recently. This last-used channel identifier is indicated by an arrow A1 in FIG. 1. Similarly, suppose that the channel identifier #136 is what the peer radio network control apparatus 2 has put into use most recently. This last-used channel identifier is indicated by another arrow A2 in FIG. 1. In the illustrated example, there are six free channel identifiers between #125 and #136, meaning that six channels are available for acquisition.
The channel identifier acquiring unit 1b selects a free channel identifier for subsequent use, based on the number of free channel identifiers counted by the free channel counting unit 1a. For example, the channel identifier acquiring unit 1b selects a free channel identifier that is the lowest of all the channel identifiers greater than the last-used channel identifier of the peer radio network control apparatus 2, in the case where the free channel counting unit 1a has found only six or fewer free channels. In the case where the number of free channels is greater than six, the channel identifier acquiring unit 1b uses an ascending round robin algorithm to select a free channel identifier that is the lowest of all the channel identifiers greater than its own last-used channel identifier.
Referring to the example of FIG. 1, six channel identifiers in the range between #125 and #136 have a FREE status, meaning that there are only six free channels. Accordingly, the channel identifier acquiring unit 1b selects a free channel identifier #138 as indicated by the arrow A3. From this point on, the radio network control apparatus 1 proceeds through the list of channel identifiers in an ascending direction, so that the arrow A3 will move downward in FIG. 1. The peer radio network control apparatus 2, on the other hand, proceeds through the same list in a descending direction, so that the arrow A2 will move upward in FIG. 1. Accordingly, the two radio network control apparatuses 1 and 2 can avoid conflict of their channel identifiers.

There may still be more than six free channels, unlike the example of FIG. 1. If this is the case, the channel identifier acquiring unit 1b seeks the next free channel identifier according to the ascending round robin algorithm, thus selecting #126 which is the lowest of all the subsequent channel identifiers greater than the last-used channel identifier #125.

As can be seen from the above discussion, the radio control apparatus 1 calculates the number of free channel identifiers in the range between its own last-used channel identifier and that of the peer radio network control apparatus 2 and selects a new free channel identifier based on the calculated number of free channel identifiers. The two radio control apparatuses 1 and 2 may request establishment of a transport channel to each other. The above-described mechanism permits them to avoid conflict of channel identifiers.

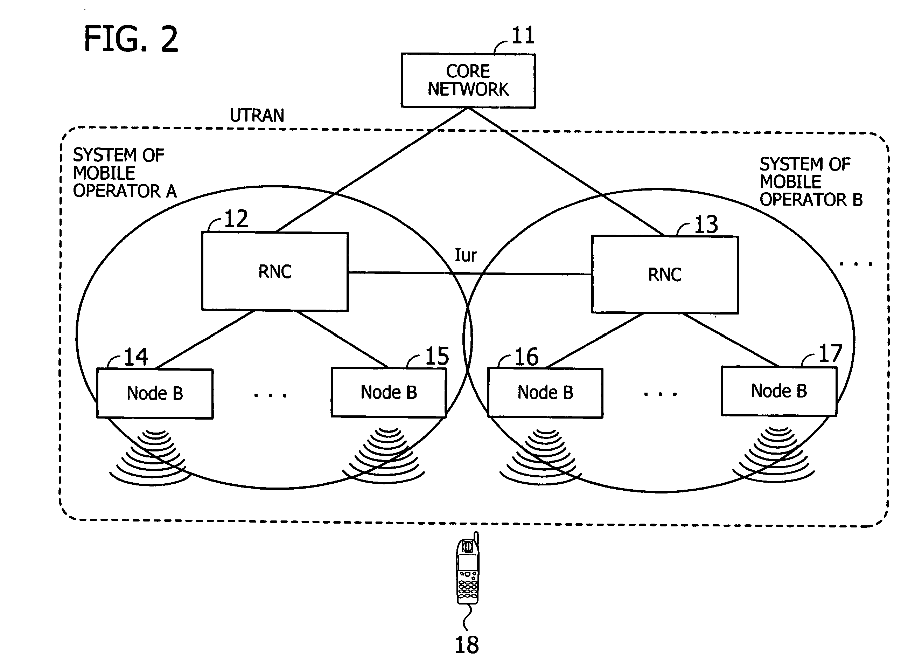

A first embodiment will now be described in detail below with reference to the accompanying drawings. FIG. 2 illustrates an example of a radio communications system according to the first embodiment. The illustrated radio communications system includes RNCs 12 and 13 connected to a core network 11. The RNCs 12 and 13 are linked with each other through Iur interface to control Node Bs 14 to 17. The first two Node Bs 14 and 15 are connected to one RNC 12, while the second two Node Bs 16 and 17 are connected to the other RNC 13. A mobile terminal 18 (e.g., cellular phone) communicates with Node Bs 14 to 17 over wireless links.

The radio communications system of FIG. 2 operates on the basis of, for example, third generation (3G) mobile technologies, where the RNCs 12 and 13 and Node Bs 14 to 17 constitute a UMTS Terrestrial Radio Access Network (UTRAN). This UTRAN may include network systems operated by different telephone companies. In the example of FIG. 2, one mobile operator A provides a network system formed from RNC 12 and Node Bs 14 and 15, and another mobile operator B provides another network system formed from RNC 13 and Node Bs 16 and 17.

The RNCs 12 and 13 perform soft handover of the mobile terminal 18. In this process, a CID is communicated so that both RNCs 12 and 13 can allocate transport resources for a dedicated channel. Suppose, for example, the soft handover takes place from the former RNC 12 (i.e., anchor) to the latter RNC 13 (i.e., drift). The anchor RNC 12 selects a free CID and notifies the drift RNC 13 of that CID by sending an ERQ message. When the CID sent from the anchor RNC 12 is successfully acquired, the drift RNC 13 sends an ECF message back to the anchor RNC 12. If it is unable to acquire the CID, the drift RNC 13 sends instead an RLC message back to the anchor RNC 12.

CIDs conform to, for example, the ITU-T Q.2630 standard, taking values ranging from 8 to 255. The anchor RNC provides the drift RNC with a CID by selecting an unused value with an appropriate method. The method may be, for example, ascending round robin, descending round robin, choose lowest, or choose highest.

More specifically, the ascending round robin algorithm selects free CIDs sequentially in the upward direction from 8 to 255. When the selection reaches 255, the method then goes back to 8 and continues to select CIDs in the same way. The descending round robin algorithm, on the other hand, selects free CIDs sequentially in the downward direction from 255 to 8. When the selection reaches 8, the method then goes back to 255 and continues to select CIDs in the same way. The choose-lowest algorithm selects a CID with the smallest value at the moment, with a limit of 8. When a CID returns to FREE status, the method selects that free CID. The choose-highest algorithm selects a CID with the greatest value at the moment, with a limit of 255. When a CID returns to FREE status, the method selects that free CID.

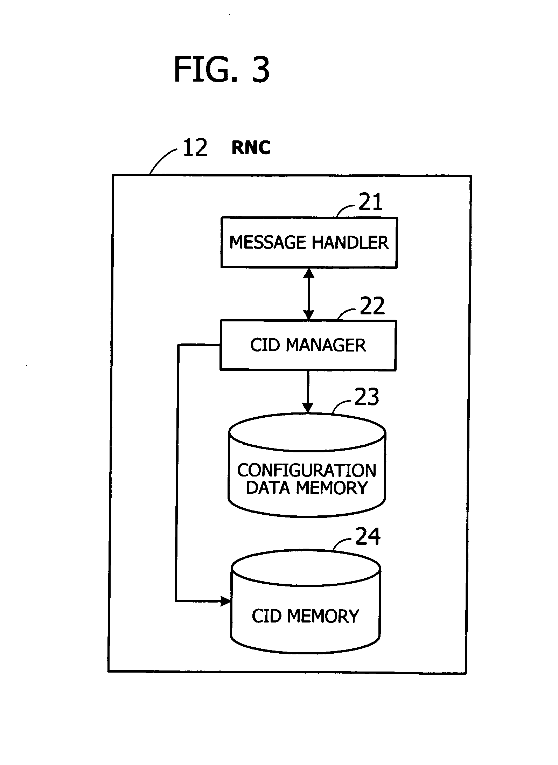

FIG. 3 is a block diagram of an RNC included in the system of FIG. 2. The illustrated RNC 12 includes a message handler 21, a CID manager 22, a configuration data memory 23, and a CID memory 24. The block diagram of FIG. 3 applies also to another RNC 13, the explanation of which will be omitted here.

The message handler 21 transmits and receives messages (e.g., ERQ, ECF, RLC) to/from the peer RNC 13. When the RNC 12 is playing the anchor role, the message handler 21 receives a CID from the CID manager 22 for delivery to the drift RNC 13. When, in turn, the RNC 12 is playing the drift role, the message handler 21 supplies the CID manager 22 with a CID received from the anchor RNC 13.

The CID manager 22 manages the configuration data memory 23 and CID memory 24 and selects a CID with reference to the configuration data memory 23 and CID memory 24. When the RNC 12 is playing the anchor role, the CID manager 22 selects and supplies a free CID to the message handler 21 for delivery to the drift RNC 13. When, in turn, the RNC 12 is playing the drift role, the CID manager 22 acquires a CID received from the anchor RNC 13.

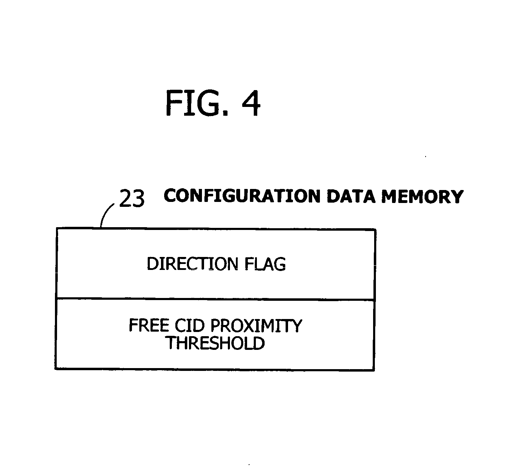

The configuration data memory 23 stores configuration data of the RNC 12. FIG. 4 illustrates an example data structure of this configuration data memory 23. The illustrated configuration data memory 23 provides two data fields to store a direction flag and a free CID proximity threshold.

The direction flag field contains a parameter that is previously defined by the user to specify which method the RNC 12 uses when selecting CIDs. For example, the direction flag field of the RNC 12 is given a value indicating an ascending round robin algorithm in the case where the peer RNC 13 is configured to use a descending round robin algorithm.

The free CID proximity threshold field, on the other hand, stores a parameter that is previously defined by the user to specify a critical number of free CIDs (described later). This parameter is referred to as a free CID proximity threshold, the value of which may range from 0 to 255, for example.

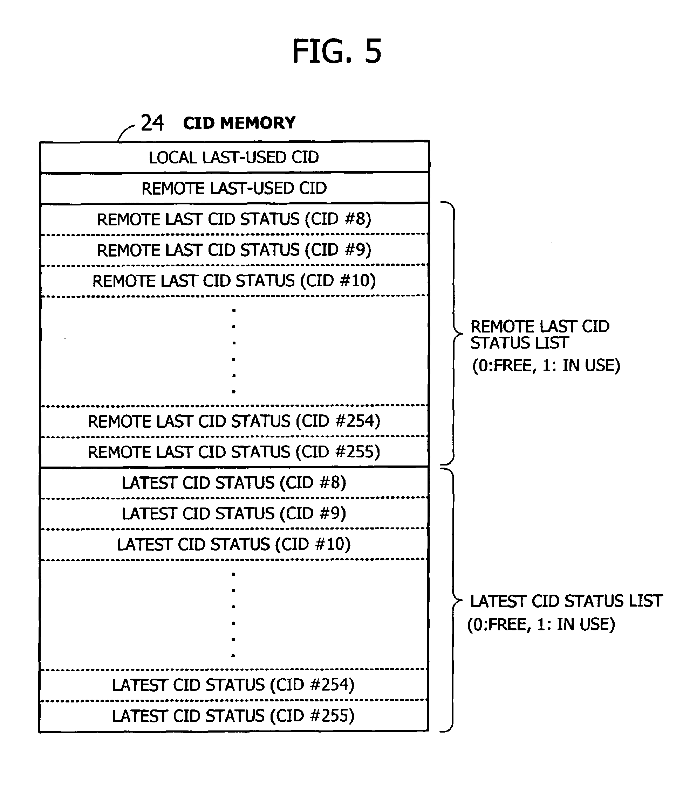

The CID memory 24 stores various information for CID management. FIG. 5 illustrates an example data structure of this CID memory 24. As can be seen from FIG. 5, the CID memory 24 has a local last-used CID field, a remote last-used CID field, a remote last CID status list, and a latest CID status list.

The local last-used CID field stores a specific CID that was acquired most recently by the CID manager 22 in the RNC 12 as anchor RNC. The value of this local last-used CID field may range from 8 to 255, for example. The remote last-used CID field, on the other hand, stores the CID contained in an ERQ message that was received most recently from its peer RNC 13, where the RNCs 12 and 13 act as drift and anchor RNCs, respectively. The value of this remote last-used CID field may range from 8 to 255, for example. As may be noted, the label "local" is used here to refer to the RNC 12 itself, and the label "remote" is used to refer to its peer RNC 13.

The remote last CID status list contains as many entries as there are different CID values. Those list entries store a copy of corresponding entries of the latest CID status list. Specifically, a snapshot of the latest CID status list is taken in response to an ERQ message from the peer RNC 13 acting as anchor RNC. The snapshot is then put into the remote last CID status list.

The latest CID status list indicates the latest usage status of each CID in both the two RNCs 12 and 13. More specifically, the CID manager 22 gives an IN-USE status to a specific CID in the latest CID status list when that CID is acquired in response to a CID allocation trigger event in the RNC 12 acting as anchor RNC. The CID manager 22 does the same when a CID is acquired from an ERQ message from the peer RNC 13 acting as anchor RNC. Also, the CID manager 22 resets the latest CID status of a specific CID back to the FREE status when that CID is released by the CID manager 22 itself. The CID manager 22 does the same when a release request for that CID is received from the peer RNC 13.

As mentioned earlier, the CID values can range from 8 to 255. Accordingly, the remote last CID status list contains as many entries as the number of possible CIDs, i.e., CID #8 to CID #255. This also applies to the number of entries of the latest CID status list. The usage status of each CID may be represented in binary form, e.g., "0" for FREE status and "1" for IN-USE status.

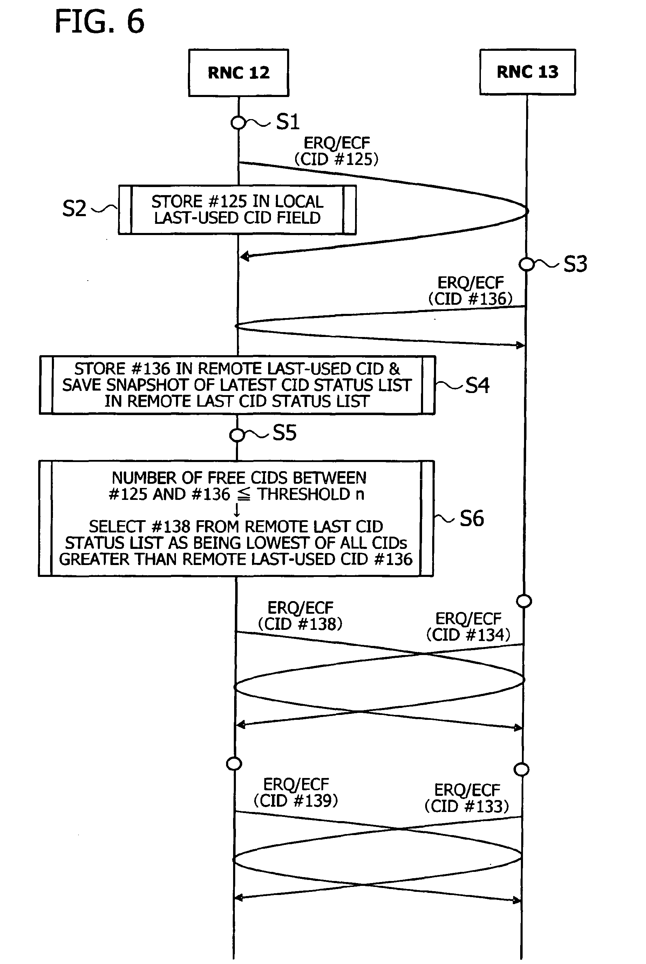

The operation of RNCs 12 and 13 will now be described below with reference to several sequence diagrams. FIG. 6 is a first sequence diagram illustrating operation of RNCs. It is assumed in this FIG. 6 that the configuration data memory 23 in the RNC 12 contains a direction flag indicating ascending round robin while its peer RNC 13 is configured to use descending round robin to select CIDs. It is also assumed that the RNC 12 stores a value of 6 in the free CID proximity threshold field of its configuration data memory 23. The sequence illustrated in FIG. 6 proceeds as follows:

In step S1, it is supposed that a CID allocation trigger event arises in the RNC 12. The RNC 12, now acting as anchor RNC, selects CID #125 and sends the drift RNC 13 an ERQ message specifying the selected CID #125. Details of this CID selection will be explained later in step S6. The anchor RNC 12 receives an ECF message from the drift RNC 13 as its response to the ERQ message.

In step S2, the RNC 12 stores the acquired CID #125 in its local last-used CID field. In addition, the RNC 12 sets the latest CID status corresponding to CID #125 to IN-USE.

In step S3, it is supposed now that a CID allocation trigger event arises in the RNC 13. The RNC 13 (now acting as anchor RNC) then selects CID #136 and sends the RNC 12 (or drift RNC) an ERQ message specifying the selected CID #136. The anchor RNC 13 receives an ECF message from the drift RNC 12 as its response to the ERQ message.

In step S4, the RNC 12 updates the remote last-used CID field by storing CID #136 specified in the ERQ message from the peer RNC 13. The RNC 12 also sets the latest CID status of that CIR #136 to IN-USE. Further, the RNC 12 takes a snapshot of the latest CID status list at the moment (i.e., when the ERQ message from RNC 13 has been processed) and puts it into the remote last CID status list.

In step S5, another CID allocation trigger event arises in the RNC 12 as anchor RNC.

In step S6, the RNC 12 examines its latest CID status list to determine whether the number of free CIDs in the range between the local last-used CID and remote last-used CID is not greater than the free CID proximity threshold n (=6). If the result is true, then the RNC 12 consults the remote last CID status list to select therefrom a free CID that is the lowest of all the available CIDs greater than the remote last-used CID. If the result is false, the RNC 12 selects the next free CID according to the ascending round robin algorithm.

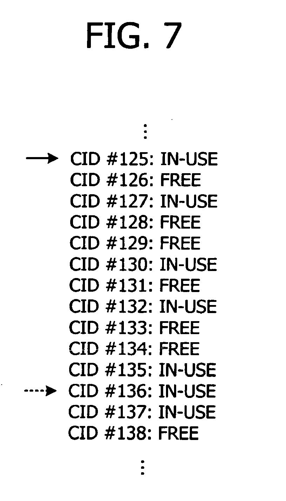

FIG. 7 illustrates a part of the latest CID status list. Specifically, FIG. 7 illustrates list entries in the CID range from #125 to #138. As can be seen, there are six free CIDs between the local last-used CID #125 (indicated by the solid arrow) and the remote last-used CID #136 (indicated by the dotted arrow). The RNC 12 thus consults its remote last CID status list to select therefrom a free CID that is the lowest of all the available CIDs greater than CID #136, the remote last-used CID.

The remote last CID status list stores a snapshot of the latest CID status at the moment of step S4. In the example sequence of FIG. 6, neither of the two RNCs 12 and 13 has acquired new CIDs or has released allocated CIDs since step S4. Accordingly, the remote last CID status list contains exactly the same information as the latest CID status list illustrated in FIG. 7. Referring to FIG. 7 as the current state of the remote last CID status list, the RNC 12 selects CID #138 since it is the lowest of all the free CIDs greater than the remote last-used CID #136.

Referring back to FIG. 6, the RNC 12 informs its peer RNC 13 of the selected CID #138 by sending an ERQ message specifying that CID. The RNC 12 then receives an ECF message back from the RNC 13 as its response to the ERQ message. The RNC 12 handles subsequent CID allocation trigger events in the same way as the above-described steps.

As can be seen from the above example, the RNC 12 watches the number of free CIDs in the range between its own last-used CID (local last-used CID) and that of the peer RNC 13 (remote last-used CID). If that number falls below a given free CID proximity threshold, the RNC 12 selects a CID that is greater than the last-used CID of the peer RNC 13, so as not to grab the same CID as the peer RNC would. In other words, the RNC 12 skips some CIDs to acquire a free CID beyond the peer RNC 13's CID when its local last-used CID has come near to the remote last-used CID. By so doing, the RNCs 12 and 13 can avoid conflict of their CIDs.

With some modification to the algorithm of CID selection, the same mechanism can also work well in the case where the RNC 12 uses a descending round robin algorithm while the peer RNC 13 uses an ascending round robin algorithm. That is, the RNC 12 selects CIDs in a descending direction, while the peer RNC 13 selects CIDs in an ascending direction. When the number of free CIDs between their last-used CIDs falls below a given free CID proximity threshold, the RNC 12 selects a CID that is smaller than the last-used CID of the peer RNC 13.

The above description has assumed that one of the two RNCs 12 and 13 selects CIDs using an ascending round robin algorithm and the other uses a descending round robin algorithm. The following example is the case where one RNC uses an ascending round robin algorithm while the other RNC uses a choose-highest algorithm (i.e., select a free CID with the highest value at the moment).

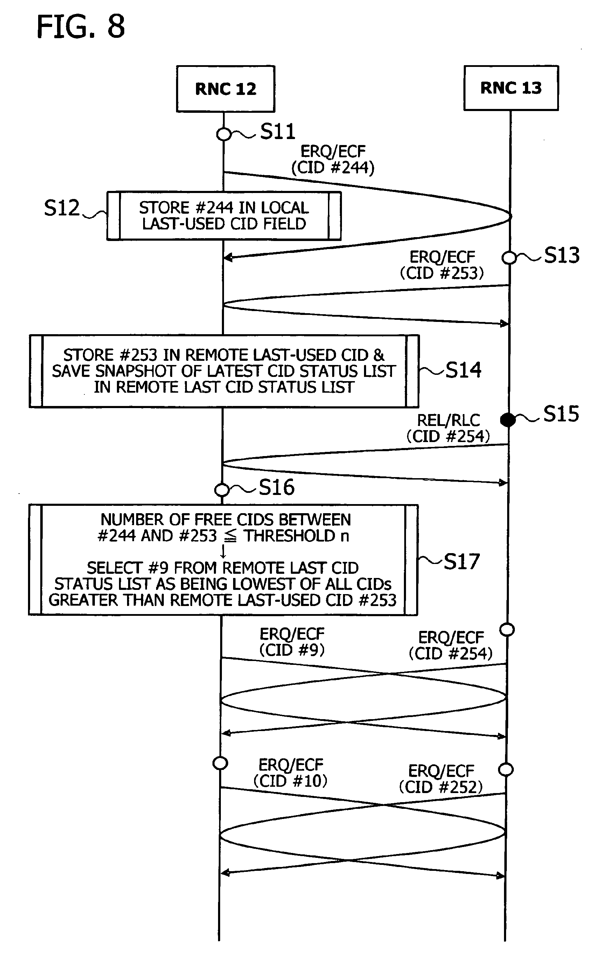

FIG. 8 is a second sequence diagram illustrating operation of RNCs. It is now assumed that the RNC 12 selects CIDs using an ascending round robin algorithm, while its peer RNC 13 selects CIDs using a choose-highest algorithm. It is also assumed that the RNC 12 stores a value of 6 in the free CID proximity threshold field of its configuration data memory 23.

In step S11, it is supposed now that a CID allocation trigger event arises in the RNC 12. The RNC 12, now acting as anchor RNC, selects CID #244 and sends the peer RNC 13, or drift RNC, an ERQ message specifying the selected CID #244. Details of this CID selection will be explained later in step S17. The anchor RNC 12 subsequently receives an ECF message from the drift RNC 13 as its response to the ERQ message.

In step S12, the RNC 12 stores the acquired CID #244 in its local last-used CID field. In addition, the RNC 12 sets the latest CID status of CID #244 to IN-USE.

In step S13, it is supposed that a CID allocation trigger event arises in the peer RNC 13. The RNC 13, acting as anchor RNC, selects CID #253 and sends the RNC 12, or drift RNC, an ERQ message specifying the selected CID #253. The anchor RNC 13 subsequently receives an ECF message from the drift RNC 12 as its response to the ERQ message.

In step S14, the drift RNC 12 updates the remote last-used CID field by storing CID #253 specified in the ERQ message received from the anchor RNC 13. The RNC 12 also sets the latest CID status of that CIR #253 to IN-USE. Further, the RNC 12 takes a snapshot of the latest CID status list at the moment (i.e., when the ERQ message from RNC 13 has been processed) and puts it into the remote last CID status list.

In step S15, the RNC 13 releases CID #254 and sends a Release Request (REL) message of AAL type 2 to the RNC 12, thus informing the RNC 12 of the releasing of CID #254. In response to this REL message, the RNC 12 sets the latest CID status of CIR #254 back to FREE. The RNC 12 then returns an RLC message to the RNC 13. Note that this step S15 does not include copying of a snapshot of the latest CID status list to the remote last CID status list since it is not ERQ message that the RNC 12 has received.

In step S16, it is supposed now that another CID allocation trigger event arises in the RNC 12.

In step S17, the RNC 12 examines the latest CID status list to determine whether the number of free CIDs in the range between the local last-used CID and remote last-used CID is not greater than the free CID proximity threshold n (=6). If the result is true, then the RNC 12 consults the remote last CID status list to select therefrom a free CID that is the lowest of all the free CIDs greater than the remote last-used CID. If the result is false, the RNC 12 selects the next free CID according to the ascending round robin algorithm.

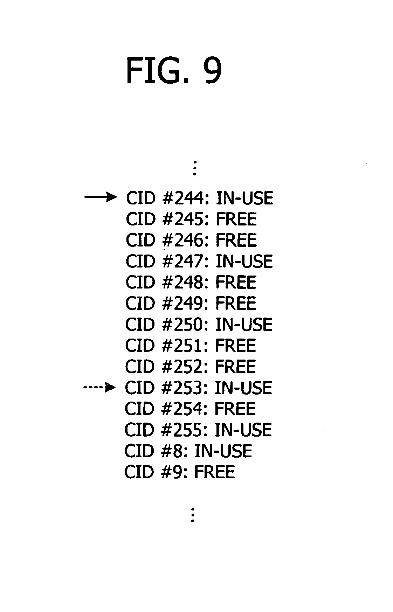

FIG. 9 illustrates a part of the latest CID status list. Specifically, FIG. 9 illustrates list entries in the CID range from #125 to #138. As can be seen, there are six free CIDs between the local last-used CID #244 (indicated by the solid arrow) and the remote last-used CID #253 (indicated by the dotted arrow). The RNC 12 thus consults the remote last CID status list to select therefrom a free CID that is the lowest of all the available CIDs greater than the remote last-used CID #253.

The remote last CID status list stores a snapshot of the latest CID status list at the point of step S14. Referring to the example sequence of FIG. 8, CID #254 is released at the subsequent step S15. Accordingly, the remote last CID status list contains the same information as the latest CID status list of FIG. 9, except that the list entry for CID #254 should still be "IN-USE." As can now be seen from FIG. 9, with the noted difference of CID #254 in mind, CID #9 is the smallest free CID of all the available CIDs greater than the remote last-used CID #253.

If the RNC 12 were configured to select a free CID with reference to the latest CID status list, the result would have been not CID #9, but CID #254. This means that it would be quite likely for both RNCs 12 and 13 to grab the same CID #254 and send conflicting ERQ messages to each other.

According to the present embodiment, however, the RNC 12 can circumvent the unfavorable situation noted above since it selects a free CID not from the latest CID status list, but from the remote last CID status list produced at step S14. Even though the peer RNC 13 may set CID #254 free at step S15, the remote last CID status list will not be affected by that change, whereas the latest CID status list is updated with the change. In other words, even if a CID becomes free, the RNC 12 will not use that CID, but skip to another free CID beyond the released CID, thus avoiding collision of CIDs.

Referring back to FIG. 8, the RNC 12 informs its peer RNC 13 of the selected CID #9 by sending an ERQ message specifying that CID. The RNC 12 then receives an ECF message back from the RNC 13 as its response to the ERQ message. The RNC 12 handles subsequent CID allocation trigger events in the same way as the above-described steps.

As can be seen from the above discussion, the RNC 12 is designed to save a snapshot of its latest CID status list as a remote last CID status list. The RNC 12 consults this remote last CID status list to select a free CID in a particular situation, i.e., when the number of free CIDs between its own last-used CID and that of the peer RNC 13 has reached or fallen below a given free CID proximity threshold. The proposed mechanism thus permits RNCs to avoid possible conflict of CIDs.

With some modification to the algorithm of CID selection, the same mechanism can also work well in the case where the RNC 12 uses a descending round robin algorithm while the peer RNC 13 uses a choose-lowest algorithm. That is, the RNC 12 selects CIDs in a descending direction, which may come near to the ones that the peer RNC 13 selects with the choose-lowest algorithm. When the number of free CIDs between their last-used CIDs has reached or fallen below the given free CID proximity threshold, the RNC 12 selects a CID that is smaller than the last-used CID of the peer RNC 13.

The operation of RNCs 12 and 13 will now be described below with reference to several flowcharts.

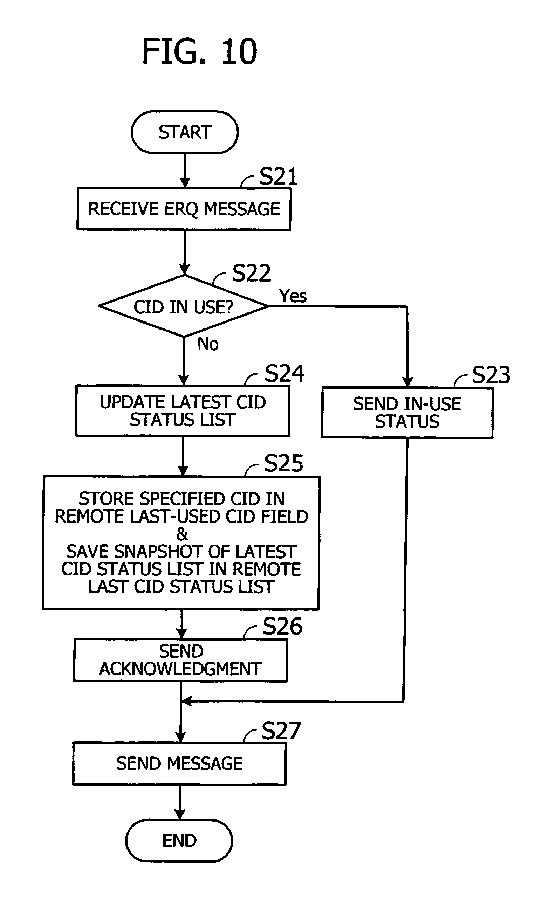

FIG. 10 is a flowchart illustrating operation of drift RNC. It is assumed here that the RNCs 12 and 13 play the roles of drift and anchor RNCs, respectively. The illustrated process is executed by the drift RNC 12 according to the following steps:

In step S21, the message handler 21 in the drift RNC 12 receives an ERQ message from the peer RNC 13. The message handler 21 then provides the CID manager 22 with a CID specified in the received ERQ message.

In step S22, the CID manager 22 consults the latest CID status list to determine whether the specified CID is in IN-USE status or FREE status. If the CID is in IN-USE status, the CID manager 22 proceeds to step S23. If the CID is in FREE status, the CID manager 22 advances to step S24.

In step S23, the CID manager 22 informs the message handler 21 of the IN-USE status of the specified CID.

In step S24, the CID manager 22 updates the latest CID status list by changing the list entry of the specified CID to "IN-USE" status.

In step S25, the CID manager 22 saves the specified CID in the remote last-used CID field. The CID manager 22 also takes a snapshot of the latest CID status list and save it in the remote last CID status list.

In step S26, the CID manager 22 sends an acknowledgment to the message handler 21.

In step S27, the message handler 21 sends a message to the anchor RNC 13 according to what has been received from the CID manager 22. Specifically, when it is a notice of acknowledgment, the message handler 21 sends an ECF message to the anchor RNC 13. When it is a notice of IN-USE status, the message handler 21 sends an RLC message to the anchor RNC 13.

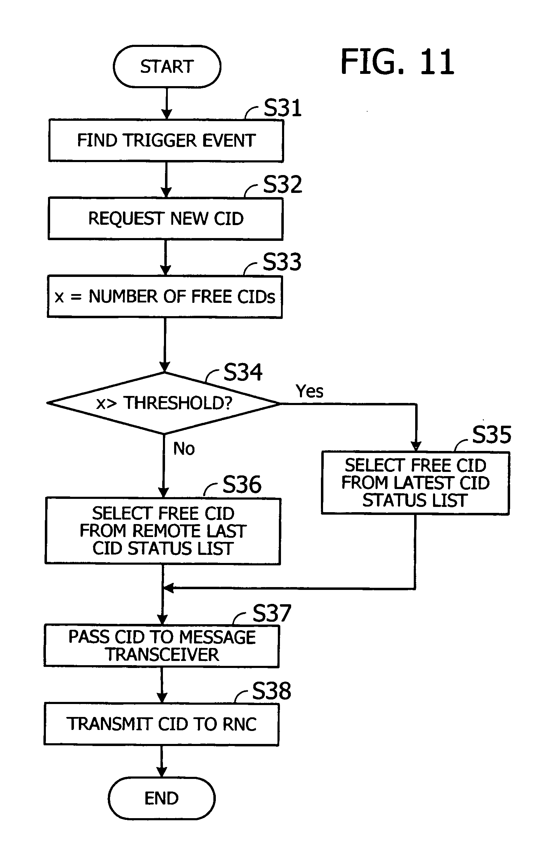

FIG. 11 is a flowchart illustrating operation of anchor RNC. This process is executed according to the following steps:

In step S31, it is supposed that a CID allocation trigger event arises in the RNC 12 as anchor RNC.

In step S32, the message handler 21 requests the CID manager 22 to allocate a CID.

In step S33, the CID manager 22 determines whether the local last-used CID is smaller than the remote last-used CID, in the case where the RNC 12 is configured to use an ascending round robin algorithm. If this condition is true, the CID manager 22 then examines the latest CID status list to count the number (x) of free CIDs that are greater than the local last-used CID and smaller than the remote last-used CID. If the above condition is false, then the CID manager 22 examines the latest CID status list to count the number (x) of free CIDs in the ranges from the local last-used CID to CID #255 and from CID #8 to the remote last-used CID.

In the case where the RNC 12 is configured to use a descending round robin algorithm, the CID manager 22 determines whether the local last-used CID is greater than the remote last-used CID. If this condition is true, the CID manager 22 examines the latest CID status list to count the number (x) of free CIDs that are smaller than the local last-used CID and greater than the remote last-used CID. If the above condition is false, then the CID manager 22 counts the number (x) of free CIDs in the range from the local last-used CID to CID #8 and from CID #255 to the remote last-used CID.

In step S34, the CID manager 22 compares the number (x) of free CIDs obtained at step S33 with a given free CID proximity threshold. If x exceeds the threshold, the CID manager 22 advances to step S35. If x is equal to or smaller than the threshold, the CID manager 22 proceeds to step S36.

In step S35, the CID manager 22 consults the latest CID status list to select therefrom a free CID that is the lowest of all the CIDs greater than the local last-used CID, in the case where the RNC 12 is configured to use an ascending round robin algorithm. In the case where the RNC 12 is configured to use a descending round robin algorithm, the CID manager 22 consults the latest CID status list to select therefrom a free CID that is the highest of all the CIDs smaller than the local last-used CID.

In step S36, the CID manager 22 consults the remote last CID status list to select therefrom a free CID that is the lowest of all the CIDs greater than the remote last-used CID, in the case where the RNC 12 is configured to use an ascending round robin algorithm. The remote last CID status list may include no free CIDs in the range from the remote last-used CID to CID #255. If this is the case, then the CID manager 22 searches the remote last CID status list in an ascending direction from the bottommost CID #8 so as to find a free CID with the lowest number.

In the case where the RNC 12 is configured to use a descending round robin algorithm, the CID manager 22 consults the remote last CID status list to select therefrom a free CID that is the highest of all the CIDs smaller than the remote last-used CID. The remote last CID status list may include no free CIDs in the range from the remote last-used CID down to CID #8. If this is the case, then the CID manager 22 searches the remote last CID status list in a descending direction from the topmost CID #255 so as to find a free CID with the largest number.

In step S37, the CID manager 22 saves the selected CID in its local last-used CID field and updates the latest CID status list by changing the list entry of the specified CID to "IN-USE" status. The CID manager 22 also supplies the selected CID to the message handler 21.

In step S38, the message handler 21 sends an ERQ message to notify the peer RNC 13 of the selected CID.

As can be seen from the flowcharts described above, the proposed RNC 12, as well as RNC 13, watches the number of free CIDs in the range between its own last-used CID and its peer RNC's last-used CID. If the number falls below a given free CID proximity threshold, the RNC 12 recognizes that its CID has come near to the peer RNC's CID, thus skipping to a free CID beyond the peer RNC's CID. With this feature, the RNCs 12 and 13 achieve conflict-free acquisition of CIDs.

The RNCs 12 and 13 select free CIDs by using the remote last CID status list, rather than the latest CID status list. The use of this remote last CID status list permits the RNCs 12 and 13 to avoid conflict of CIDs even if some CIDs are released during the course of CID acquisition.

The mobile terminal 18 is allowed to roam from one RNC's coverage area to another RNC's coverage area (e.g., RNC 12 to RNC 13). The feature of conflict-free CID acquisition contributes to a reduced probability of failed radio link establishment and consequent call loss.

The mobile terminal 18 may originate a call during the process of soft handover (i.e., when the mobile terminal 18 is performing control channel signaling or packet communication in an overlapping region of two radio coverage areas). The above-noted feature of RNC also reduces the failure rate of such call origination.

It is noted that two or more ERQ messages may be transmitted simultaneously. The free CID proximity threshold may be defined with a certain amount of margin so as to cope with such simultaneous ERQ messages. Where appropriate, the free CID proximity threshold may be determined from the number of dedicated channels that can be added at a single occurrence of soft handover. More specifically, the threshold may be set to

$$(N_{DCCH} + N_{DTCH} \times 2) \times N_{NodeB}$$

where DCCH stands for Dedicated Control Channel, and DTCH means Dedicated Traffic Channel. $N_{DCCH}$ represents the number of DCCH channels, $N_{DTCH}$ the number of DTCH channels, and $N_{NodeB}$ the number of Node Bs.

A second embodiment will now be described in detail below with reference to the accompanying drawings. The foregoing first embodiment has assumed that one RNC uses an ascending round robin algorithm while the other RNC uses a descending round robin or choose-highest algorithm, or alternatively, that one RNC uses a descending round robin algorithm while the other RNC uses an ascending round robin or choose-lowest algorithm. In other words, the two RNCs select their CIDs in opposite directions.

The second embodiment avoids conflict of CIDs even in the case where one RNC uses an ascending round robin algorithm while the other RNC uses an ascending round robin or choose-lowest algorithm. Also, the second embodiment avoids conflict of CIDs even in the case where one RNC uses a descending round robin algorithm while the other RNC uses a descending round robin or choose-highest algorithm. In other words, the second embodiment achieves the purpose even when the two RNCs select CIDs in the same direction.

The foregoing radio communications system of FIG. 2 also applies to the second embodiment. The second embodiment involves RNCs 12 and 13 having the same block structure as discussed earlier in FIG. 3, except for some functions of the CID manager 22.

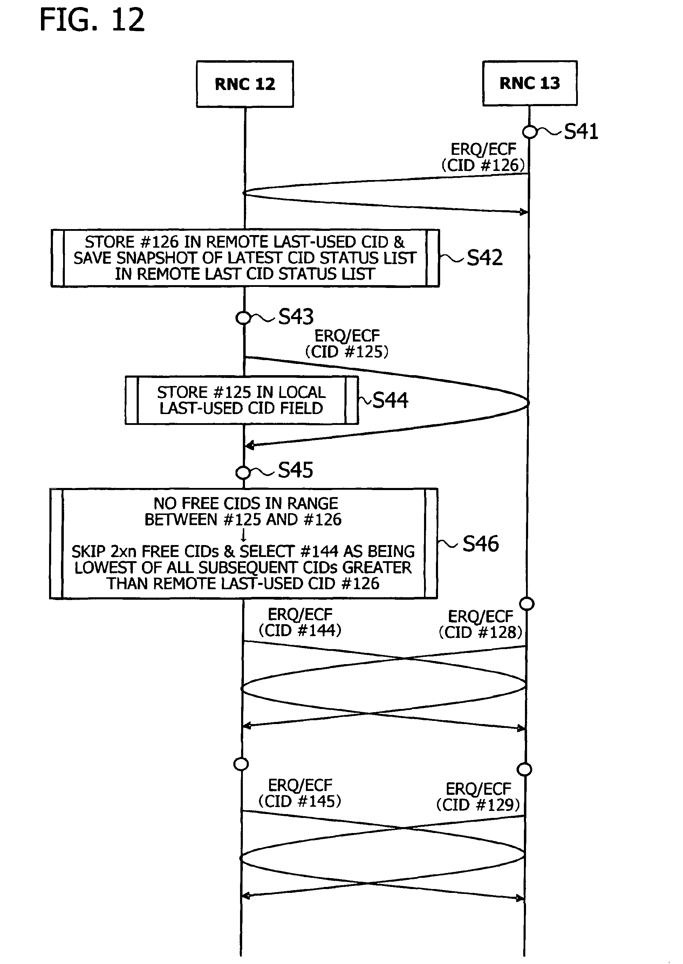

FIG. 12 is a first sequence diagram illustrating operation of RNC according to the second embodiment.

Both RNC 12 and RNC 13 use the ascending round robin algorithm. In the example of FIG. 12, the RNC 13 is preceding the RNC 12 in terms of CID values, but their distance is becoming smaller.

In step S41, it is supposed that a CID allocation trigger event arises in the RNC 13. The RNC 13, acting as anchor RNC, selects CID #126 and sends the RNC 12, or drift RNC, an ERQ message specifying the selected CID #126. The anchor RNC 13 subsequently receives an ECF message from the drift RNC 12 as its response to the ERQ message.

In step S42, the drift RNC 12 updates the remote last-used CID field by storing CID #126 specified in the received ERQ message. The drift RNC 12 also sets the latest CID status of that CIR #126 to IN-USE. Further, the RNC 12 takes a snapshot of the latest CID status list at that moment and saves it in the remote last CID status list.

In step S43, it is supposed that a CID allocation trigger event arises now in the RNC 12. Acting as anchor RNC, the RNC 12 selects free CID #125 and sends it to the peer RNC 13 in the form of an ERQ message. Details of this CID selection will be explained later in step S46. The anchor RNC 12 subsequently receives an ECF message from the drift RNC 13 as its response to the ERQ message.

In step S44, the RNC 12 stores the acquired CID #125 in its local last-used CID field and sets the latest CID status of CID #125 to IN-USE.

In step S45, it is supposed that another CID allocation trigger event arises in the RNC 12.

In step S46, the RNC 12 examines the remote last CID status list to count the number of free CIDs in the range between the local last-used CID #125 and the remote last-used CID #126. If the result is zero, then the RNC 12 consults its latest CID status list to skip twice as many free CIDs as the free CID proximity threshold n (=6) beyond the remote last-used CID and select a free CID that is the lowest of all the subsequent free CIDs greater than the remote last-used CID. If the result is not zero, the RNC 12 selects the next free CID according to the ascending round robin algorithm.

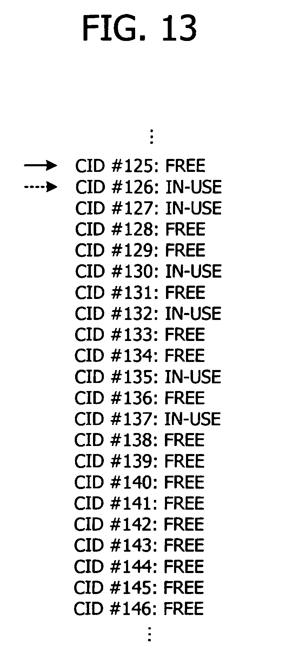

FIG. 13 illustrates a part of the remote last CID status list. Specifically, FIG. 13 illustrates list entries in the CID range from #125 to #146. In this example of FIG. 13, there are no free CIDs in the range between the local last-used CID #125 (solid arrow) and the remote last-used CID #126 (dotted arrow). Accordingly, the RNC 12 skips twelve free CIDs in its latest CID status list and then tries to find therefrom a free CID that is the lowest of all the free CIDs greater than the remote last-used CID #126.

The latest CID status list is similar to the remote last CID status list of FIG. 13, except that the entry of CID #125 should indicate "IN-USE" because the RNC 12 has selected that CID #125 at step S43. As this FIG. 13 indicates, CID #144 is what the RNC 12 is to choose in this context, since it is greater than the remote last-used CID #126 and will be the lowest of all free CIDs if the subsequent twelve free CIDs are skipped.

Referring back to FIG. 12, the RNC 12 sends an ERQ message to inform its peer RNC 13 of the selected CID #144. The RNC 12 then receives an ECF message back from the RNC 13 as its response to the ERQ message. The RNC 12 handles subsequent CID allocation trigger events in the same way as the above-described steps.

As can be seen from the above example, the two RNCs' CIDs may come closer to each other. The RNC 12 monitors the number of free CIDs in the range between its own last-used CID and the peer RNC 13's last-used CID. If the free CIDs in that range are exhausted, the RNC 12 selects a CID that is not only the lowest of all the free CIDs greater than the remote last-used CID, but also distant from the local last-used CID by twice as many free CIDs as the free CID proximity threshold. In other words, the RNC 12 skips free CIDs lying ahead, thus leaving the RNC 13 behind. By so doing, the RNC 12 avoids conflict with its peer RNC 13 during their CID acquisition operation.

The above embodiment avoids conflict of CIDs in the case where both RNCs 12 and 13 use an ascending round robin algorithm. It is noted that the described mechanism can be slightly modified to handle the case where RNCs use a descending round robin algorithm. More specifically, in the modified version, the RNC 12 similarly skips a number of free CIDs and then selects a free CID that is the highest of all the subsequent free CIDs smaller than the remote last-used CID, rather than selecting the lowest of all the free CIDs greater than the remote last-used CID.

The following section will now describe the case where the RNC 12 is approached by its peer RNC 13 in terms of CID values.

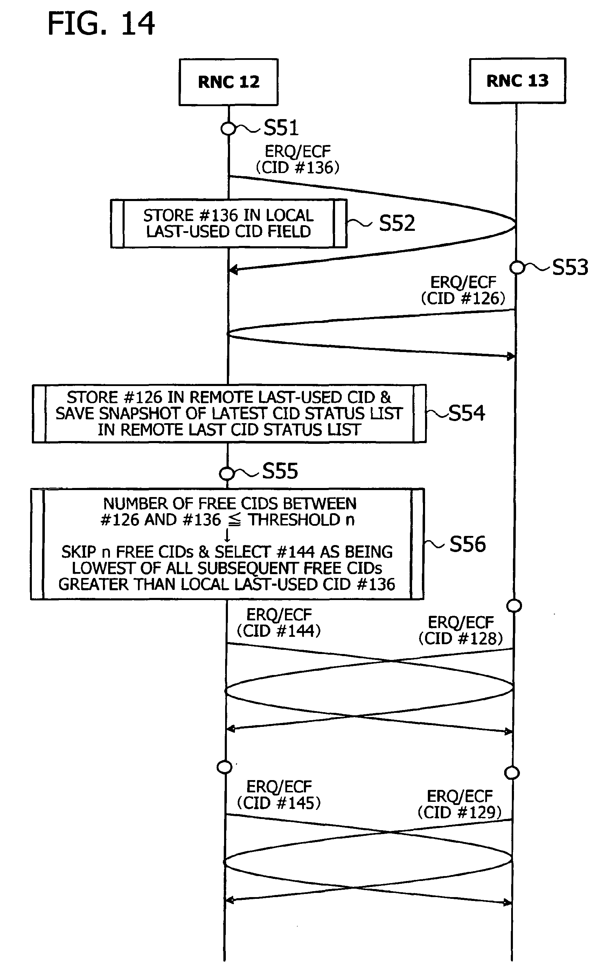

FIG. 14 is a second sequence diagram illustrating operation of RNCs according to the second embodiment. Both RNC 12 and RNC 13 use the ascending round robin algorithm. The latter RNC 13 is now catching up with the former RNC 12, and the distance between their CIDs is decreasing.

In step S51, it is supposed that a CID allocation trigger event arises in the RNC 12. The RNC 12, now acting as anchor RNC, selects a free CID #136 and sends an ERQ message to notify the peer RNC 13 of the selected CID #136. Details of this CID selection will be explained later in step S56. The anchor RNC 12 subsequently receives an ECF message from the drift RNC 13 as its response to the ERQ message.

In step S52, the RNC 12 saves the acquired CID #136 in its local last-used CID field and sets the latest CID status of CID #136 to IN-USE.

In step S53, it is supposed that a CID allocation trigger event arises now in the RNC 13. Acting as anchor RNC, the RNC 13 selects CID #126 and sends the RNC 12 an ERQ message specifying the selected CID #126. The anchor RNC 13 then receives an ECF message back from the drift RNC 12 as its response to the ERQ message.

In step S54, the drift RNC 12 updates the remote last-used CID field by storing CID #126 specified in the received ERQ message. The RNC 12 also sets the latest CID status of that CIR #126 to IN-USE. Further, the RNC 12 takes a snapshot of the latest CID status list at that moment and saves it in the remote last CID status list.

In step S55, it is supposed that another CID allocation trigger event arises in the RNC 12.

In step S56, the RNC 12 examines its latest CID status list to count the number of free CIDs in the range between the remote last-used CID #126 and the local last-used CID #136. The RNC 12 then determines whether the number of free CIDs is not greater than a given free CID proximity threshold n (=6). If the result is true, then the RNC 12 consults its latest CID status list to skip n free CIDs (n=6) and select a free CID that is the lowest of all the subsequent free CIDs greater than the local last-used CID #136. If the result is false, the RNC 12 selects the next free CID according to the ascending round robin algorithm.

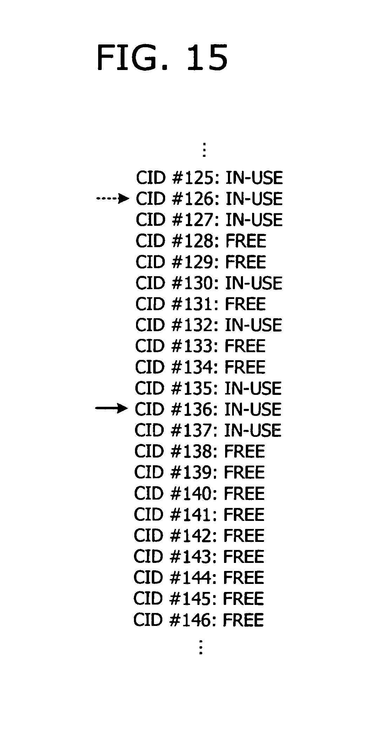

FIG. 15 illustrates a part of the latest CID status list. Specifically, FIG. 15 illustrates list entries in the CID range from #125 to #146. In this example of FIG. 15, there are only five free CIDs in the range between the local last-used CID #136 (indicated by the solid arrow) and the remote last-used CID #126 (indicated by the dotted arrow). Accordingly, the RNC 12 skips six free CIDs and selects CID #144, which is the lowest of all subsequent free CIDs greater than the local last-used CID #136.

Referring back to FIG. 14, the RNC 12 sends an ERQ message to inform the peer RNC 13 of the selected CID #144. The RNC 12 then receives an ECF message back from the peer RNC 13 as its response to the ERQ message. The RNC 12 handles subsequent CID allocation trigger events in the same way as the above-described steps.

In the above example, the RNC 12 sees its peer RNC 13's CID coming nearer to its own CID. The RNC 12 counts how many free CIDs are in the range between its own and the peer RNC 13's last-used CIDs. If the number of such CIDs has reached or fallen below a given free CID proximity threshold, the RNC 12 skips as many free CIDs as the free CID proximity threshold (n) and selects a CID that is the lowest of all the subsequent free CIDs greater than the local last-used CID. In other words, the RNC 12 temporarily accelerates itself so that its CID cannot be caught up by the RNC 13. Accordingly, the RNCs 12 and 13 can avoid conflict of their CIDs.

Note that the RNC 12 skips n free CIDs when its CID is approached by the peer RNC 13's, whereas the RNC 12 skips nx2 free CIDs when its CID approaches the peer RNC's. The reason for this asymmetry is that the two RNCs 12 and 13 would otherwise choose the same CID. For example, think of a situation where:

- Local last-used CID = #100
- Remote last-used CID = #99
- Free CID proximity threshold = 6
- Status of CIDs #100 to #255 = FREE

If both RNCs 12 and 13 skipped six free CIDs in this situation, they would select the same CID #107 for allocation.

The example discussed above is a case where both RNCs 12 and 13 use an ascending round robin algorithm. It is noted that the above-described mechanism can be slightly modified to handle the case where both RNCs 12 and 13 use a descending round robin algorithm. More specifically, the RNC 12 in the modified version skips a number of free CIDs and then selects a free CID that is the highest of all subsequent free CIDs smaller than the remote last-used CID, rather than selecting the lowest of all subsequent free CIDs greater than the remote last-used CID.

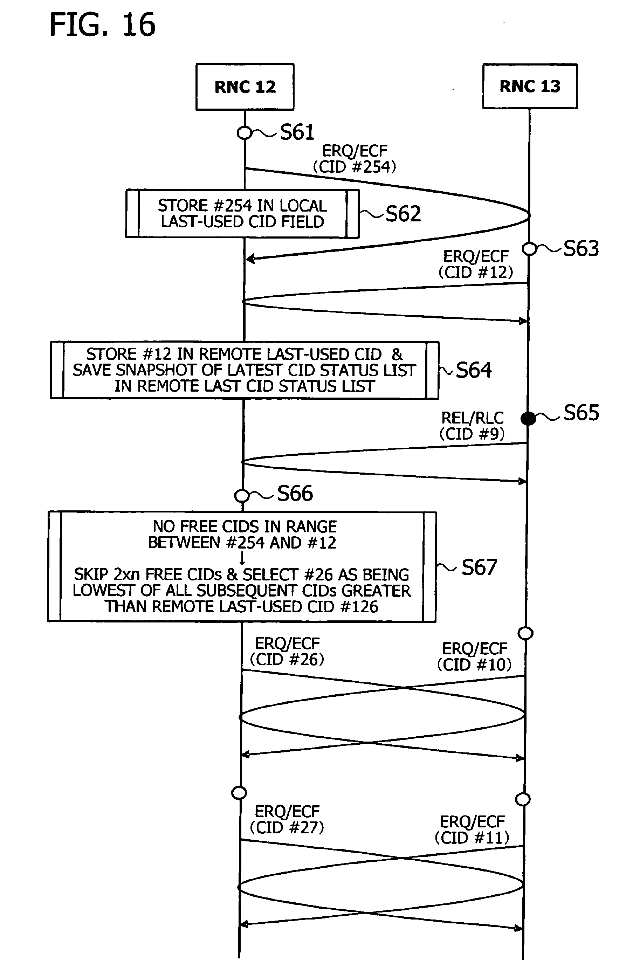

As another example, the RNC 12 may use ascending round robin, and its peer RNC 13 uses the choose-lowest method. In selecting CIDs, the RNC 12 may approach its peer RNC 13. FIG. 16 is a third sequence diagram illustrating how the RNCs 12 and 13 operate in this situation.

In step S61, it is supposed that a CID allocation trigger event arises in the RNC 12. The RNC 12, now acting as anchor RNC, selects free CID #254 and sends an ERQ message to inform the peer RNC 13 of the selected CID #254. Details of this CID selection will be explained later in step S67. The anchor RNC 12 subsequently receives an ECF message from the drift RNC 13 as its response to the ERQ message.

In step S62, the RNC 12 stores the acquired CID #254 in its local last-used CID field and sets the latest CID status of CID #254 to IN-USE.

In step S63, it is supposed that a CID allocation trigger event arises now in the RNC 13. The RNC 13 selects free CID #12 and sends an ERQ message to inform its peer RNC 12 of the selected CID #12. The anchor RNC 13 receives an ECF message from the drift RNC 12 as its response to the ERQ message.

In step S64, the RNC 12 updates the remote last-used CID field by storing CID #12 specified in the received ERQ message. The RNC 12 also sets the latest CID status of that CIR #12 to IN-USE. Further, the RNC 12 takes a snapshot of the latest CID status list at that moment and saves it in the remote last CID status list.

In step S65, it is supposed that the RNC 13 releases CID #9. The RNC 13 sends an REL message to inform the RNC 12 of the releasing of CID #9. In response to this REL message, the RNC 12 sets the latest CID status of CIR #9 back to FREE. Note that the reception of an REL message does not initiate copying of a snapshot of the latest CID status list to the remote last CID status list. The RNC 12 then sends an RLC message to the RNC 13.

In step S66, it is supposed that another CID allocation trigger event arises in the RNC 12.

In step S67, the RNC 12 examines the remote last CID status list to count the number of free CIDs in the range between the local last-used CID #254, and the remote last-used CID #12. If the result is zero, then the RNC 12 consults its latest CID status list to move beyond the remote last-used CID by skipping twice as many free CIDs as the free CID proximity threshold n. The RNC 12 then selects a free CID that is the lowest of all the subsequent free CIDs greater than the remote last-used CID. If the result is not zero, the RNC 12 selects the next free CID according to the ascending round robin algorithm.

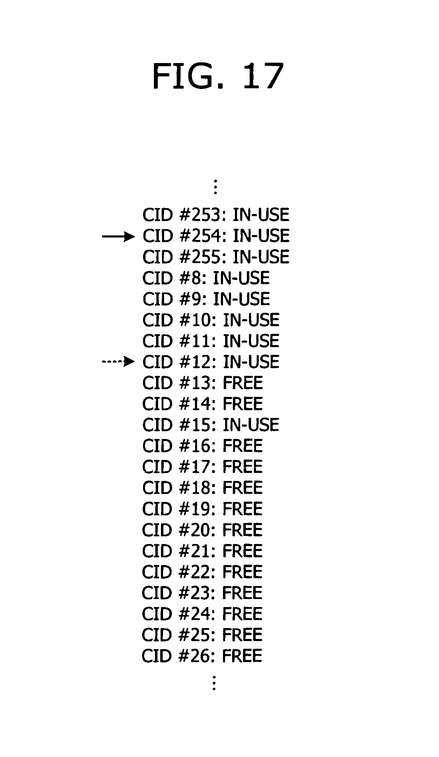

FIG. 17 illustrates a part of the remote last CID status list. Specifically, FIG. 17 illustrates list entries in the CID range from #253 to #26. In this example of FIG. 17, there are no free CIDs in the range between the local last-used CID #254 (indicated by the solid arrow) and the remote last-used CID #12 (indicated by the dotted arrow). Accordingly, the RNC 12 moves beyond the remote last-used CID #12 by skipping therefrom twelve free CIDs in its latest CID status list and then selects a free CID that is the lowest of all subsequent free CIDs greater than the remote last-used CID #12.

The latest CID status list is similar to the remote last CID status list of FIG. 17, except that the entry of CID #9 should indicate "FREE" because the RNC 12 has released that CID #9 at step S65. Referring to FIG. 17 with this difference in mind, CID #26 is what the RNC 12 is supposed to select. That is, CID #26 is greater than the remote last-used CID #12 and is the lowest of all subsequent free CIDs when twelve free CIDs are skipped. The RNC 12 sends an ERQ message to inform the peer RNC 13 of the selected CID #26. The RNC 12 then receives an ECF message back from the RNC 13 as its response to the ERQ message. The RNC 12 handles subsequent CID allocation trigger events in the same way as the above-described steps.

In the above example, the RNC 12 sees its own CID nearing CID of the peer RNC 13's. The RNC 12 counts how many free CIDs are in the range between its own and the peer RNC 13's last-used CIDs. If there are no free CIDs in that range, the RNC 12 skips twice as many free CIDs as the free CID proximity threshold (n) and selects a CID that is the lowest of all the subsequent free CIDs greater than the remote last-used CID. In other words, the RNC 12 temporarily accelerates itself, thus leaving its peer RNC 13 behind. Accordingly, the RNC 12 can prevent its CIDs from conflicting with CIDs of the peer RNC 13.

It is noted that the RNCs 12 and 13 consult their remote last CID status list, rather than the latest CID status list, when they count free CIDs. By so doing, the RNCs 12 and 13 avoid potential conflict of their CIDs in the case where some CIDs are released during the course of CID selection operation.

The example discussed above is a case where one RNC 12 uses an ascending round robin algorithm while another RNC 13 uses a choose-lowest algorithm.

With some modification to the algorithm of CID selection, the same mechanism can also work well in the case where the RNC 12 uses a descending round robin algorithm while the peer RNC 13 uses a choose-highest algorithm. More specifically, the RNC 12 in the modified version skips a number of free CIDs and then selects a free CID that is the highest of all the subsequent free CIDs smaller than the remote last-used CID, rather than selecting the lowest of all the free CIDs greater than the remote last-used CID.

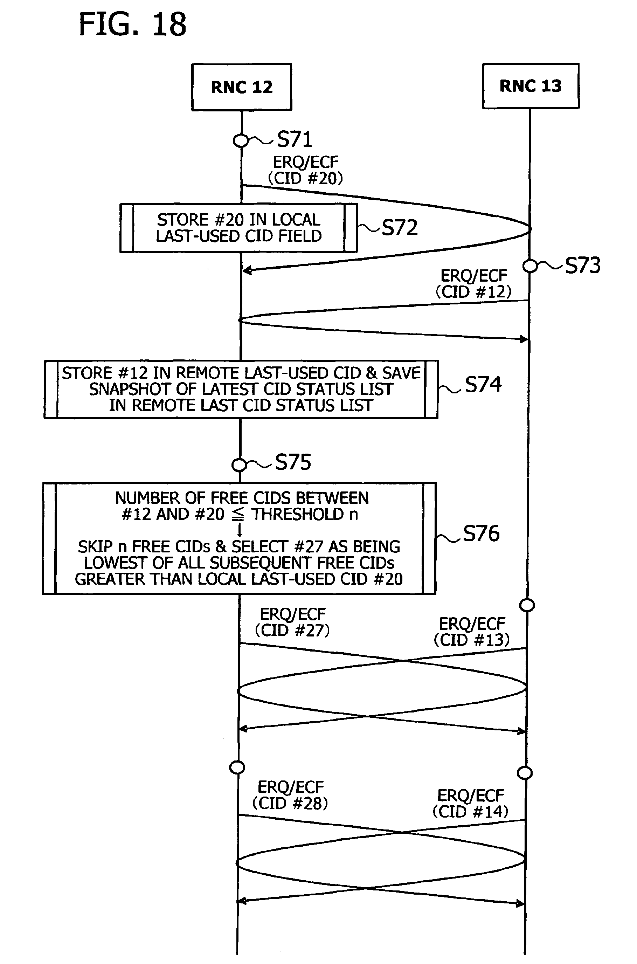

Referring now to FIG. 18, the following will describe the case where the RNC 12 is approached by its peer RNC 13 in selecting CIDs. FIG. 18 is a fourth sequence diagram illustrating operation of RNCs according to the second embodiment. It is assumed that one RNC 12 uses ascending round robin while the other RNC 13 uses the choose-lowest method.

In step S71, it is supposed that a CID allocation trigger event arises in the RNC 12. As anchor RNC, the RNC 12 selects free CID #20 and sends an ERQ message to inform its peer RNC 13 of the selected CID #20. Details of this CID selection will be explained later in step S76. The anchor RNC 12 subsequently receives an ECF message from the drift RNC 13 as its response to the ERQ message.

In step S72, the RNC 12 saves the acquired CID #20 in its local last-used CID field and sets the latest CID status of CID #20 to IN-USE.

In step S73, it is supposed that a CID allocation trigger event arises now in the RNC 13. As anchor RNC, the RNC 13 selects free CID #12 and sends an ERQ message to inform the drift RNC 12 of the selected CID #12. The anchor RNC 13 receives an ECF message from the drift RNC 12 as its response to the ERQ message.

In step S74, the RNC 12 updates the remote last-used CID field by storing CID #12 specified in the received ERQ message. The RNC 12 also sets the latest CID status of that CIR #12 to IN-USE. Further, the RNC 12 takes a snapshot of the latest CID status list at that moment and saves it in the remote last CID status list.

In step S75, it is supposed that another CID allocation trigger event arises in the RNC 12.

In step S76, the RNC 12 examines its latest CID status list to count the number of free CIDs in the range between the remote last-used CID #12 and the local last-used CID #20. The RNC 12 then determines whether the number of free CIDs is not greater than a given free CID proximity threshold n (=6). If the result is true, then the RNC 12 consults its latest CID status list to skip n free CIDs (n=6) and select a subsequent free CID that is the lowest of all the free CIDs greater than the local last-used CID. If the result is false, the RNC 12 selects the next free CID according to the ascending round robin algorithm.

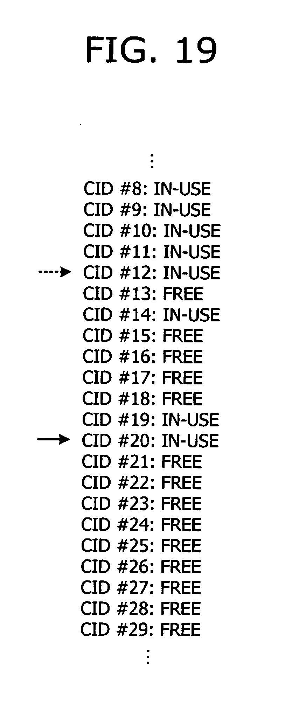

FIG. 19 illustrates a part of the latest CID status list. Specifically, FIG. 19 illustrates list entries in the CID range from #8 to #29. In this example of FIG. 19, there are only five free CIDs in the range between the remote last-used CID #12 (indicated by the dotted arrow) and the local last-used CID #20 (indicated by the solid arrow). Accordingly, the RNC 12 skips six free CIDs and then selects CID #27 since it is the lowest of all subsequent free CIDs greater than the local last-used CID #20.

Referring back to FIG. 18, the RNC 12 sends an ERQ message to inform its peer RNC 13 of the selected CID #27. The RNC 12 then receives an ECF message back from the RNC 13 as its response to the ERQ message. The RNC 12 handles subsequent CID allocation trigger events in the same way as the above-described steps.

In the above example, the RNC 12 sees its own CID being approached by the CID of the peer RNC 13. The RNC 12 counts how many free CIDs are in the range between its own and the peer RNC 13's last-used CIDs. If the number of such CIDs has reached or fallen below a given free CID proximity threshold, the RNC 12 skips as many free CIDs as the free CID proximity threshold (n) and selects a CID that is the lowest of all the subsequent free CIDs greater than the local last-used CID. In other words, the RNC 12 temporarily accelerates itself so that its CID cannot be caught up by the peer RNC 13. Accordingly, the RNC 12 can prevent its CIDs from conflicting with CIDs of the peer RNC 13.

The example discussed above is a case where one RNC 12 uses an ascending round robin algorithm while another RNC 13 uses a choose-lowest algorithm. With some modification to the algorithm of CID selection, the same mechanism can also work well in the case where the RNC 12 uses a descending round robin algorithm while the peer RNC 13 uses a choose-highest algorithm. More specifically, the RNC 12 in the modified version skips a number of CIDs and selects a free CID that is the highest of all subsequent free CIDs smaller than the remote last-used CID, rather than the lowest of all subsequent free CIDs greater than the remote last-used CID.

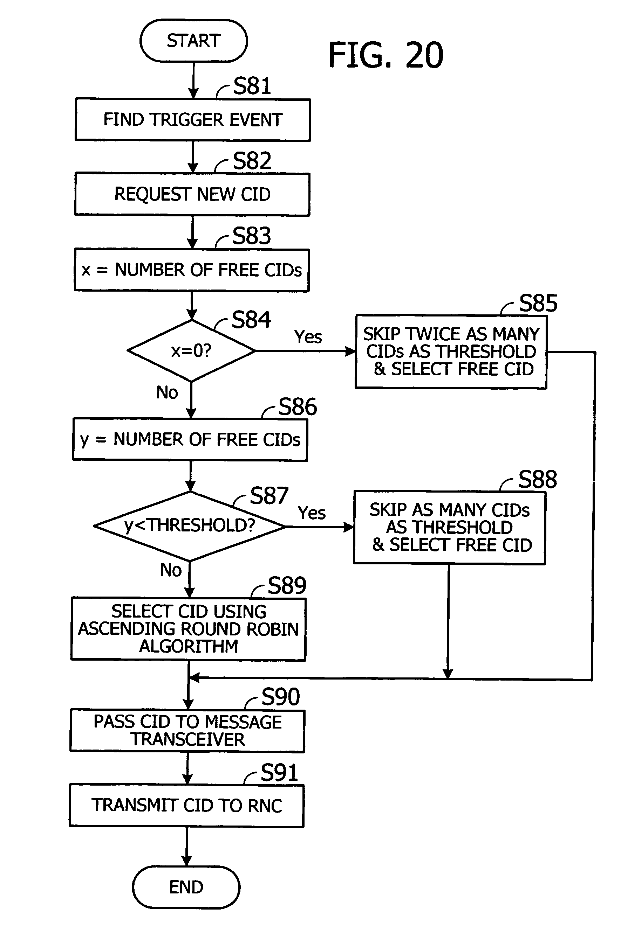

Referring now to the flowchart of FIG. 20, the operation of RNCs 12 and 13 will be described below. Note that those flowcharts and their corresponding descriptions are directed to the operation of anchor RNC. See FIG. 10 for drift RNC.

FIG. 20 is a flowchart that describes operation of anchor RNC, assuming that both RNCs 12 and 13 select CIDs in an ascending direction.

In step S81, a CID allocation trigger event is found in the RNC 12.

In step S82, the message handler 21 requests the CID manager 22 to allocate a CID.

In step S83, the CID manager 22 determines whether the local last-used CID is smaller than the remote last-used CID. If this condition is true, the CID manager 22 examines the remote last CID status list to count the number (x) of free CIDs that are greater than the local last-used CID and smaller than the remote last-used CID.

The local last-used CID may not be smaller than the remote last-used CID. If this is the case, then the CID manager 22 examines the remote last CID status list to count the number (x) of free CIDs in the range from the local last-used CID to CID #255 and from CID #8 to the remote last-used CID.

In step S84, the CID manager 22 determines whether the number (x) of free CIDs is zero. In other words, the CID manager 22 determines whether the RNC 12 has caught up with the peer RNC 13 in terms of CID values. If the number of free CIDs is zero, then the CID manager 22 advances to step S85. If not, the CID manager 22 proceeds to step S86.

In step S85, the CID manager 22 consults the latest CID status list to skip twice as many free CIDs as the free CID proximity threshold and select a free CID that is the lowest of all the subsequent CIDs greater than the remote last-used CID. When no free CIDs are found in the range from the remote last-used CID to CID #255, the CID manager 22 goes back to CID #8 and seeks a free CID from that point.

In step S86, the CID manager 22 examines the latest CID status list to count how many free CIDs are available. More specifically, when the local last-used CID is greater than the remote last-used CID, the CID manager 22 counts the number (y) of free CIDs that are greater than the remote last-used CID and smaller than the local last-used CID. When the local last-used CID is not greater than the remote last-used CID, the CID manager 22 counts the number (y) of free CIDs in the ranges from the remote last-used CID to CID #255 and from CID #8 to the local last-used CID.

In step S87, the CID manager 22 compares the number (y) of free CIDs obtained at step S86 with the free CID proximity threshold. If y is smaller than the threshold, the CID manager 22 advances to step S88. If y is equal to or greater than the threshold, the CID manager 22 proceeds to step S89.

In step S88, the CID manager 22 consults the latest CID status list to skip as many free CIDs as the free CID proximity threshold and select a free CID that is the lowest of all the subsequent CIDs greater than the local last-used CID. When no free CIDs are found in the range from the remote last-used CID to CID #255, the CID manager 22 goes back to CID #8 and seeks a free CID from that point.

In step S89, the CID manager 22 consults the latest CID status list and selects therefrom a free CID that is the lowest of all the CIDs greater than the local last-used CID, according to the ascending round robin algorithm.

In step S90, the CID manager 22 saves the selected CID in its local last-used CID field and sets the latest CID status of that CID to IN-USE. The CID manager 22 also passes the selected CID to the message handler 21.

In step S91, the message handler 21 sends an ERQ message to inform the peer RNC 13 of the CID.

While the flowchart of FIG. 20 illustrates a case where both RNCs 12 and 13 select CIDs in an ascending direction, the same flowchart can be applied similarly to the case where they select CIDs in a descending direction if some simple modifications are made to the algorithm as have been discussed in earlier sections. In both cases, the RNCs 12 and 13 skip several subsequent free CIDs and select the next one when they find their CIDs coming nearer to each other. By so doing, the RNCs 12 and 13 maintain their distance to avoid conflict while they keep selecting CIDs in the same direction.

A third embodiment will now be described in detail below with reference to the remaining drawings. The foregoing first and second embodiments have assumed that the CID selection algorithm (e.g., ascending round robin, descending round robin, choose-highest, choose-lowest) used by a peer RNC is previously defined, discovered, or declared. By combining the first embodiment and second embodiment, the third embodiment avoids conflict of CIDs without the need for identifying which CID selection algorithm is actually used in the peer RNC.

The radio communications system discussed earlier in FIG. 2 also serves as an example system configuration for the third embodiment. The block diagram of FIG. 3 also applies to the RNCs 12 and 13 according to the third embodiment, except for some functions of their CID manager 22. The RNCs 12 and 13 of the third embodiment may not have memory areas for direction flag in their configuration data memory 23. The RNCs 12 and 13 may rather fix their CID selection algorithm to, for example, ascending round robin or descending round robin, since the third embodiment permits an RNC to avoid CID conflict regardless of which algorithm is used in its peer RNC to select CIDs.

For illustrative purposes, the following description assumes that the RNC 12 uses an ascending round robin algorithm. The RNC 12 performs each of the following three tests #1 to #3 and performs one of the following operations #1 to #3 corresponding to the test that is found true, thereby avoiding CID conflict without the need for checking which algorithm the peer RNC 13 is using to select CIDs.

Test #1: The RNC 12 examines its latest CID status list to test whether the number of free CIDs in the range between the local last-used CID and remote last-used CID is not greater than a given free CID proximity threshold.

Operation #1: If the above test #1 is true, the RNC 12 consults the remote last CID status list to select therefrom a free CID that is the lowest of all the CIDs greater than the remote last-used CID.

Note here that the above test #1 and operation #1 correspond to what is performed in the foregoing first embodiment. That is, test #1 and operation #1 avoid CID conflict in the case where the peer RNC 13 uses a descending round robin or choose-highest algorithm.

Test #2: The RNC 12 examines its remote last CID status list to test whether the number of free CIDs in the range between the local last-used CID and remote last-used CID is zero.

Operation #2: If the above test #1 is true, then the RNC 12 consults its latest CID status list to skip twice as many free CIDs following the remote last-used CID as the free CID proximity threshold and select a free CID that is the lowest of all the subsequent free CIDs.

Test #3: The RNC 12 examines its latest CID status list to test whether the number of free CIDs in the range between the remote last-used CID and local last-used CID is not greater than the given free CID proximity threshold.

Operation #3: If the above test #3 is true, then the RNC 12 consults its latest CID status list to skip as many free CIDs following the local last-used CID as the free CID proximity threshold and select a free CID that is the lowest of all the subsequent free CIDs.

Note here that the above tests #2 and #3 and operations #2 and #3 correspond to what is performed in the foregoing second embodiment. That is, tests #2 and #3 and operations #2 and #3 avoid CID conflict in the case where the peer RNC 13 uses an ascending round robin or choose-lowest algorithm.

The RNC 12 may find that both tests #1 and #2 are true. If that is the case, the RNC 12 executes both operations #1 and #2 and compares the resulting CIDs, thus choosing the one that is more distant from the remote last-used CID (i.e., CID of RNC 13).

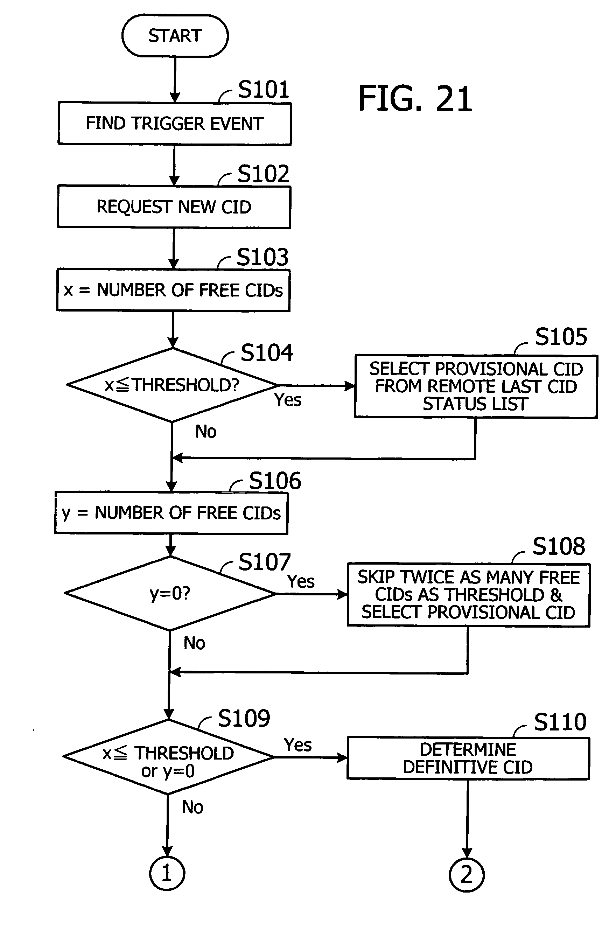

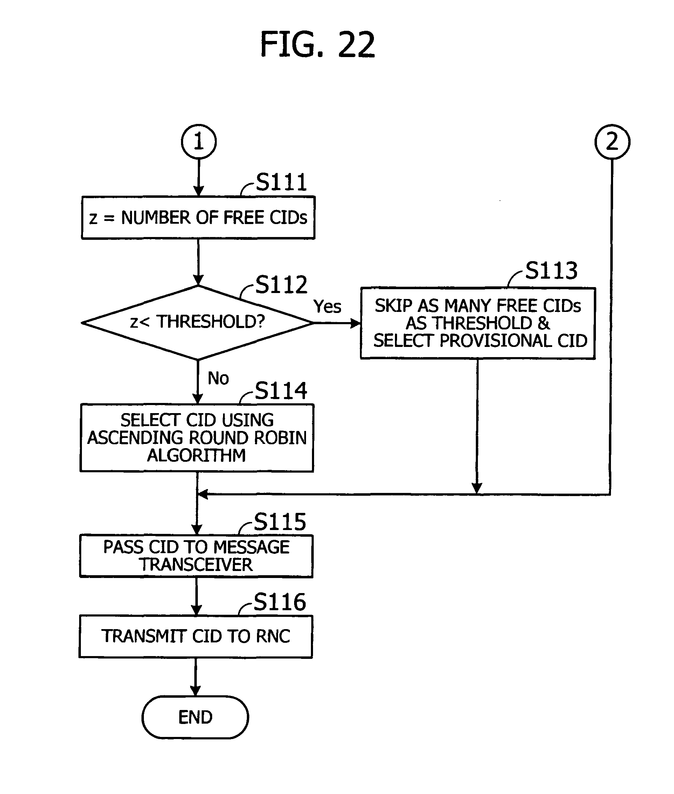

Referring now to the flowchart of FIGS. 21 and 22, the operation of RNCs 12 and 13 will be described below. Note that the flowchart and description are directed to the operation of anchor RNC. See FIG. 10 for drift RNC.

FIGS. 21 and 22 give a flowchart describing operation of anchor RNC.

In step S101, a CID allocation trigger event is detected in the RNC 12.

In step S102, the message handler 21 requests the CID manager 22 to allocate a CID.

In step S103, the CID manager 22 examines the latest CID status list to count how many free CIDs are available. More specifically, when the local last-used CID is smaller than the remote last-used CID, the CID manager 22 counts the number (x) of free CIDs that are greater than the local last-used CID and smaller than the remote last-used CID. When the local last-used CID is not smaller than the remote last-used CID, the CID manager 22 examines the latest CID status list to count the number (x) of free CIDs in the ranges from the local last-used CID to CID #255 and from CID #8 to the remote last-used CID.

In step S104, the CID manager 22 determines whether the number (x) of free CIDs is not greater than a given free CID proximity threshold. If the result is true, then the CID manager 22 advances to step S105. If the result is false, the CID manager 22 proceeds to step S106.

In step S105, the CID manager 22 consults the remote last CID status list to select therefrom a free CID that is the lowest of all the CIDs greater than the remote last-used CID. The remote last CID status list may include, however, no free CIDs in the range from the remote last-used CID to CID #255. If this is the case, then the CID manager 22 searches the remote last CID status list upward from the bottommost CID #8 to select a free CID with the lowest number. The free CID selected in this step S105 is regarded as a provisional CID at the moment.

In step S106, the CID manager 22 examines the remote last CID status list to count how many free CIDs are available. More specifically, when the local last-used CID is smaller than the remote last-used CID, the CID manager 22 counts the number (y) of free CIDs that are greater than the local last-used CID and smaller than the remote last-used CID. When the local last-used CID is not smaller than the remote last-used CID, the CID manager 22 counts the number (y) of free CIDs in the ranges from the local last-used CID to CID #255 and from CID #8 to the remote last-used CID.

In step S107, the CID manager 22 determines whether the number (y) of free CIDs is zero. If y is zero, the CID manager 22 advances to step S108. If y is not zero, then the CID manager 22 advances to step S109.

In step S108, the CID manager 22 consults the latest CID status list to skip twice as many free CIDs as the free CID proximity threshold and select a free CID that is the lowest of all the subsequent CIDs greater than the remote last-used CID. When no free CIDs are found in the range from the remote last-used CID to CID #255, the CID manager 22 goes back to CID #8 and seeks a free CID from that point.

In step S109, the CID manager 22 looks back on each test result of step S104 (whether x ≤ free CID proximity threshold) and step S107 (whether y=0). If one or both of those test results hold true, the CID manager 22 proceeds to step S110. If none of those test results is true, the CID manager 22 advances to step S111.

In step S110, the CID manager 22 calculates a distance between the remote last-used CID and each provisional CID obtained at steps S105 and S108, in the case where the test results of steps S104 and S107 are both true. The CID manager 22 then chooses the one with a greater distance from the remote last-used CID, thus determining that CID as definitive one.

In the case where only the result of step S104 is true, the CID manager 22 then chooses the provisional CID of step S105 as definitive one. Likewise, in the case where only the result of step S107 is true, the CID manager 22 then chooses the provisional CID of step S108 as definitive one. The CID manager 22 now moves from step S110 to step S115.

In step S111, the CID manager 22 examines the latest CID status list to count how many free CIDs are available. More specifically, when the local last-used CID is greater than the remote last-used CID, the CID manager 22 counts the number (z) of free CIDs that are greater than the remote last-used CID and smaller than the local last-used CID.

When the local last-used CID is not greater than the remote last-used CID, the CID manager 22 counts the number (z) of free CIDs in the ranges from the remote last-used CID to CID #255 and from CID #8 to the local last-used CID.

In step S112, the CID manager 22 determines whether the number (z) of free CIDs is smaller than the free CID proximity threshold. If the result is true, the CID manager 22 proceeds to step S113. If the result is false, then the CID manager 22 advances to step S114.

In step S113, the CID manager 22 consults the latest CID status list to skip as many free CIDs as the free CID proximity threshold and select a free CID that is the lowest of all the subsequent CIDs greater than the local last-used CID. When no free CIDs are found in the range from the remote last-used CID to CID #255, the CID manager 22 goes back to CID #8 and seeks a free CID from that point.

In step S114, the CID manager 22 consults the latest CID status list and selects therefrom a free CID that is the lowest of all the free CIDs greater than the local last-used CID, according to the ascending round robin algorithm.

In step S115, the CID manager 22 updates the local last-used CID field with the CID that has been determined in step S110 or selected in step S113 or S114. Further, the CID manager 22 sets the latest CID status of that CID to IN-USE, besides passing the CID to the message handler 21.

In step S116, the message handler 21 transmits an ERQ message to the peer RNC 13, specifying therein the CID supplied from the CID manager 22.

As can be seen from the above description of the third embodiment, the RNCs 12 and 13 performs the foregoing tests #1 to #3 and executes operations corresponding to their results. The third embodiment permits the RNCs 12 and 13 to avoid conflict of their CIDs without the need for identifying each other's CID selection method. This feature works even in the case where the radio access network includes RNCs from different vendors.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention has (have) been described in detail, it should be understood that various changes, substitutions, and alterations could be made hereto without departing from the scope of the claims.

**Claims**

1. A radio network control apparatus (1) capable of being linked with a peer apparatus (2) thereof to control radio base stations, the radio network control apparatus comprising:

   a free channel counting unit (1a) arranged to count the number of free channel identifiers, CID, in a range between a last-used channel identifier of the radio network control apparatus and that of the peer apparatus; and
   a channel identifier acquiring unit (1b) arranged to select a free channel identifier, based on the number of free channel identifiers counted by the free channel counting unit.

2. The radio network control apparatus according to claim 1, wherein the channel identifier acquiring unit is arranged to select a free channel identifier, CID, by searching a list of channel identifiers from the last-used channel identifier of the peer apparatus (2) in a direction opposite to a search direction of the peer apparatus.

3. The radio network control apparatus according to claim 1, wherein the channel identifier acquiring unit (1b) is arranged to perform the selection of a free channel identifier, CID, based on a comparison of the number of free channel identifiers with a specified proximity threshold.

4. The radio network control apparatus according to claim 1 or 3, further comprising:

   a usage status memory (24) arranged to store a usage status list indicating usage status of each channel identifier, CID, selected by the radio network control apparatus (1) or the peer apparatus (2); and
   a usage status snapshot memory (24) arranged to take a snapshot of the usage status list when a new channel identifier is requested from the peer apparatus.

5. The radio network control apparatus according to claim 4, wherein:

   the radio network control apparatus (1) is configured to select channel identifiers, CID, in a direction that is opposite to that of the peer apparatus (2);
   the free channel counting unit (1a) is arranged to count the number of free channels by consulting the usage status memory; and
   the channel identifier acquiring unit (1b) is arranged to select a free channel identifier by consulting the usage status snapshot memory.

6. The radio network control apparatus according to claim 5, wherein the channel identifier acquiring unit (1b) is arranged to select a free channel identifier, CID, that is either the lowest of all free channel identifiers greater than the last-used channel identifier of the peer apparatus (2) or the highest of all free channel identifiers smaller than the last-used channel identifier of the peer apparatus.

7. The radio network control apparatus according to claim 4, 5, or 6, wherein:

   the radio network control apparatus (1) is configured to select channel identifiers, CID, in the same direction as that of the peer apparatus (2); and
   when the radio network control apparatus is approaching the peer apparatus in channel identifier selection, the free channel counting unit (1a) counts the number of free channel identifiers by consulting the usage status snapshot memory, and the channel identifier acquiring unit (1b) selects a free channel identifier by consulting the usage status memory.

8. The radio network control apparatus according to claim 7, wherein the channel identifier acquiring unit (1b) is arranged to skip a specified number of free channel identifiers, CID, subsequent to the last-used channel identifier of the peer apparatus (2), before selecting a free channel identifier.

9. The radio network control apparatus according to claim 4, 5, or 6, wherein the radio network control apparatus (1) is configured to select channel identifiers, CID, in the same direction as that of the peer apparatus (2); and when the radio network control apparatus is being approached by the peer apparatus in channel identifier selection, the free channel counting unit (1a) counts the number of free channel identifiers by consulting the usage status memory, and the channel identifier acquiring unit (1b) selects a free channel identifier by consulting the usage status memory.

10. The radio network control apparatus according to claim 9, wherein the channel identifier acquiring unit (1b) is arranged to skip a specified number of free channel identifiers, CID subsequent to the last-used channel identifier of the radio network control apparatus before selecting a free channel identifier.

11. The radio network control apparatus according to claim 10, wherein the number of subsequent free channel identifiers that the channel identifier acquiring unit (1b) skips when the radio network control apparatus (1) is being approached by the peer apparatus (2) is smaller than the number of subsequent free channel identifiers, CID, that the channel identifier acquiring unit skips when the radio network control apparatus is approaching the peer apparatus.

12. The radio network control apparatus according to any of claims 4 to 11, wherein the free channel counting unit comprises:

a first comparator (22) which is arranged to count the number of free channel identifiers, CID, by consulting the usage status memory and compares the resulting number with a specified proximity threshold;
a channel identifier finder (22), responsive to the comparison performed by the first comparator to consult the usage status snapshot memory to determine whether free channel identifiers are available therein; and
a second comparator (22), responsive to the determination made by the channel identifier finding unit to count the number of free channel identifiers by consulting the usage status memory and compares the resulting number with the proximity threshold.

13. The radio network control apparatus according to claim 12, wherein:

the channel identifier acquiring unit (1b) is arranged to select a first provisional channel identifier, CID, based on comparison results of the first comparator, select a second provisional channel identifier based on comparison results of the second comparator, and choose either of the first and second provisional channel identifiers based on comparison thereof with the last-used channel identifier of the peer apparatus.

14. A method executed by a radio network control apparatus (1) sharing channel identifiers, CID, with a peer apparatus (2) thereof for controlling radio base stations, the method comprising:

counting the number of free channel identifiers in a range between a last-used channel identifier of the radio network control apparatus and a last-used channel identifier of the peer apparatus; and
selecting a free channel identifier, based on the number of free channel identifiers that is counted.

**Patentansprüche**

1. Funknetz-Steuergerät (1), das fähig ist, mit einem Peer-Gerät (2) verbunden zu werden, um Funkbasisstationen zu steuern, wobei das Funknetz-Steuergerät Folgendes aufweist:

eine Einheit (1a) zum Zählen freier Kanäle, die eingerichtet ist, um die Anzahl freier Kanalidentifikatoren CID in einem Bereich zwischen einem zuletzt benutzten Kanalidentifikator des Funknetz-Steuergeräts und dem des Peer-Geräts zu zählen,
eine Kanalidentifikator-Erfassungseinheit (1b), die eingerichtet ist, um einen freien Kanalidentifikator basierend auf der Anzahl freier Kanalidentifikatoren,
die von der Zähleinheit freier Kanäle gezählt wurde,
auszuwählen.

2. Funknetz-Steuergerät nach Anspruch 1, wobei die Kanalidentifikator-Erfassungseinheit eingerichtet ist, um einen freien Kanalidentifikator, CID auszuwählen, indem sie eine Liste von Kanalidentifikatoren von dem zuletzt verwendeten Kanalidentifikator des Peer-Geräts (2) in eine Richtung entgegengesetzt zu einer Suchrichtung des Peer-Geräts durchsucht.

3. Funknetz-Steuergerät nach Anspruch 1, wobei die Kanalidentifikator-Erfassungseinheit (1b) eingerichtet ist, um die Auswahl eines freien Kanalidentifikators CID basierend auf einem Vergleich der Anzahl freier Kanalidentifikatoren mit einem spezifizierten Näherungsschwellenwert auszuführen.

4. Funknetz-Steuergerät nach Anspruch 1 oder 3, das ferner Folgendes aufweist:

einen Nutzungsstatusspeicher (24), der eingerichtet ist,
um eine Nutzungsstatusliste zu speichern, die den Nutzungsstatus jedes Kanalidentifikators CID anzeigt,
der von dem Funknetzwerk-Steuergerät (1) oder dem Peer-Gerät (2) ausgewählt wird, und einen Nutzungsstatus-Schnappschussspeicher (24), der eingerichtet ist, um einen Schnappschuss der Nutzungsstatusliste anzulegen, wenn ein neuer Kanalidentifikator von dem Peer-Gerät angefordert wird.

5. Funknetz-Steuergerät nach Anspruch 4, wobei:

das Funknetz-Steuergerät (1) konfiguriert ist, um Kanalidentifikatoren CID in eine Richtung auszuwählen,
die der des Peer-Geräts (2) entgegengesetzt ist,
die Zähleinheit (1a) freier Kanäle eingerichtet ist, um die Anzahl freier Kanäle zu zählen, indem der Nutzungsstatusspeicher eingesehen wird, und

die Kanalidentifikator-Erfassungseinheit (1b) eingerichtet ist, um einen freien Kanalidentifikator durch Einsehen des Nutzungsstatus-Schnappschussspeichers zu identifizieren.

6. Funknetz-Steuergerät nach Anspruch 5, wobei die Kanalidentifikator-Erfassungseinheit (1b) eingerichtet ist, um einen freien Kanalidentifikator CID auszuwählen, der entweder der niedrigste aller freien Kanalidentifikatoren, die größer als der zuletzt benutzte Kanalidentifikator des Peer-Geräts (2) sind, oder der höchste aller freien Kanalidentifikatoren, die kleiner als der zuletzt benutzte Kanalidentifikator des Peer-Geräts sind, ist.

7. Funknetz-Steuergerät nach Anspruch 4, 5 oder 6, wobei:

das Funknetz-Steuergerät (1) konfiguriert ist, um Kanalidentifikatoren CID in dieselbe Richtung auszuwählen wie die des Peer-Geräts (2), und

wenn sich das Funknetz-Steuergerät dem Peer-Gerät bei der Kanalidentifikator-Auswahl nähert, die Zähleinheit (1a) freier Kanäle die Anzahl freier Kanalidentifikatoren zählt, indem der Nutzungsstatus-Schnappschussspeicher eingesehen wird und die Kanalidentifikator-Erfassungseinheit (1b) einen freien Kanalidentifikator durch Einsehen des Nutzungsstatusstatusspeichers auswählt.

8. Funknetz-Steuergerät nach Anspruch 7, wobei die Kanalidentifikator-Erfassungseinheit (1b) eingerichtet ist, um eine spezifizierte Anzahl freier Kanalidentifikatoren CID im Anschluss an den zuletzt verwendeten Kanalidentifikator des Peer-Geräts (2) zu überspringen, bevor ein freier Kanalidentifikator ausgewählt wird.

9. Funknetz-Steuergerät nach Anspruch 4, 5 oder 6, wobei das Funknetz-Steuergerät (1) konfiguriert ist, um Kanalidentifikatoren CID in dieselbe Richtung wie die des Peer-Geräts (2) auszuwählen, und wenn sich das Peer-Gerät dem Funknetz-Steuergerät bei der Kanalidentifikator-Auswahl nähert, die Zähleinheit (1a) freier Kanäle die Anzahl freier Kanalidentifikatoren zählt, indem der Nutzungsstatusspeicher eingesehen wird, und die Kanalidentifikator-Erfassungseinheit (1b) einen freien Kanalidentifikator auswählt, indem sie den Nutzungsstatusspeicher einsieht.

10. Funknetz-Steuergerät nach Anspruch 9, wobei die Kanalidentifikator-Erfassungseinheit (1b) eingerichtet ist, um eine spezifizierte Anzahl freier Kanalidentifikatoren CID im Anschluss an den zuletzt verwendeten Kanalidentifikator des Funknetz-Steuergeräts vor der Auswahl eines freien Kanalidentifikators zu überspringen.

11. Funknetz-Steuergerät nach Anspruch 10, wobei die Anzahl aufeinander folgender freier Kanalidentifikatoren, die die Kanalidentifikator-Erfassungseinheit (1b) überspringt, wenn sich das Peer-Gerät (2) dem Funknetz-Steuergerät (1) nähert, kleiner ist als die Anzahl aufeinander folgender freier Kanalidentifikatoren CID, die die Kanalidentifikator-Erfassungseinheit überspringt, wenn sich das Funknetz-Steuergerät dem Peer-Gerät nähert.

12. Funknetz-Steuergerät nach einem der Ansprüche 4 bis 11, wobei die Zähleinheit freier Kanäle Folgendes aufweist:

einen ersten Komparator (22), der eingerichtet ist, um die Anzahl freier Kanalidentifikatoren CID zu zählen,

indem der Nutzungsstatusspeicher eingesehen wird, und

die resultierende Anzahl mit einem spezifizierten Näherungsschwellenwert vergleicht,

einen Kanalidentifikatorfinder (22), der auf den vergleich reagiert, der von dem ersten Komparator ausgeführt wird, um den Nutzungsstatus-Schnappschussspeicher einzusehen, um zu bestimmen, ob darin freie Kanalidentifikatoren verfügbar sind, und einen zweiter Komparator (22), der auf das Bestimmen reagiert, das von der Kanalidentifikatorfindereinheit ausgeführt wird, um die Anzahl freier Kanalidentifikatoren zu zählen, indem der Nutzungsstatusspeicher eingesehen wird, und die resultierende Anzahl mit dem Näherungsschwellenwert vergleicht.

13. Funknetz-Steuergerät nach Anspruch 12, wobei:

die Kanalidentifikator-Erfassungseinheit (1b) eingerichtet ist, um einen ersten vorläufigen Kanalidentifikator CID basierend auf Vergleichsergebnissen des ersten Komparators auszuwählen, einen zweiten vorläufigen Kanalidentifikator basierend auf Vergleichsergebnissen des zweiten Komparators auszuwählen und entweder den ersten oder den zweiten vorläufigen Kanalidentifikator basierend auf deren Vergleich mit dem zuletzt verwendeten Kanalidentifikator des Peer-Geräts auszuwählen.

14. Verfahren, das von einem Funknetz-Steuergerät (1), das sich Kanalidentifikatoren CID mit einem Peer-Gerät (2) teilt, ausgeführt wird, um Funkbasisstationen zu steuern, wobei das Verfahren Folgendes aufweist:

Zählen der Anzahl freier Kanalidentifikatoren in einem Bereich zwischen einem zuletzt benutzten Kanalidentifikator des Funknetz-Steuergeräts und einem zuletzt benutzten Kanalidentifikator des Peer-Geräts, und Auswählen eines freien Kanalidentifikators basierend auf der Anzahl freier Kanalidentifikatoren, die gezählt wird.

## Revendications

1. Appareil de contrôle de réseau radio (1) capable d'être relié avec un appareil pair (2) de celui-ci pour contrôler des stations de base radio, l'appareil de contrôle de réseau radio comprenant :

une unité de comptage de canal libre (1a) agencée pour compter le nombre d'identificateurs de canaux libres, CID, dans une plage entre un dernier identificateur de canal utilisé de l'appareil de contrôle de réseau radio et celui de l'appareil pair ; et une unité d'acquisition d'identificateur de canal (1b) agencée pour sélectionner un identificateur de canal libre, sur la base du nombre d'identificateurs de canaux libres compté par l'unité de comptage de canal libre.

2. Appareil de contrôle de réseau radio selon la revendication 1, dans lequel l'unité d'acquisition d'identificateur de canal est agencée pour sélectionner un identificateur de canal libre, CID, en recherchant dans une liste d'identificateurs de canaux à partir du dernier identificateur de canal utilisé de l'appareil pair (2) dans une direction opposée à une direction de recherche de l'appareil pair.

3. Appareil de contrôle de réseau radio selon la revendication 1, dans lequel l'unité d'acquisition d'identificateur de canal (1b) est agencée pour effectuer la sélection d'un identificateur de canal libre, CID, sur la base d'une comparaison du nombre d'identificateurs de canaux libres avec un seuil de proximité spécifié.

4. Appareil de contrôle de réseau radio selon la revendication 1 ou 3, comprenant en outre :

une mémoire de statut d'utilisation (24) agencée pour stocker une liste de statuts d'utilisation indiquant le statut d'utilisation de chaque identificateur de canal, CID, sélectionné par l'appareil de contrôle de réseau radio (1) ou l'appareil pair (2) ; et une mémoire d'instantané de statut d'utilisation (24) agencée pour prendre un instantané de la liste de statuts d'utilisation lorsqu'un nouvel identificateur de canal est demandé en provenance de l'appareil pair.

5. Appareil de contrôle de réseau radio selon la revendication 4, dans lequel :

l'appareil de contrôle de réseau radio (1) est configuré pour sélectionner des identificateurs de canaux, CID, dans une direction qui est opposée à celle de l'appareil pair (2) ; l'unité de comptage de canal libre (1a) est agencée pour compter le nombre de canaux libres en consultant la mémoire de statut d'utilisation ; et l'unité d'acquisition d'identificateur de canal (1b) est agencée pour sélectionner un identificateur de canal libre en consultant la mémoire d'instantané de statut d'utilisation.

6. Appareil de contrôle de réseau radio selon la revendication 5, dans lequel l'unité d'acquisition d'identificateur de canal (1b) est agencée pour sélectionner un identificateur de canal libre, CID, qui est soit le plus bas de tous les identificateurs de canaux libres supérieurs au dernier identificateur de canal utilisé de l'appareil pair (2) soit le plus haut de tous les identificateurs de canaux libres inférieurs au dernier identificateur de canal utilisé de l'appareil pair.

7. Appareil de contrôle de réseau radio selon la revendication 4, 5 ou 6, dans lequel :

l'appareil de contrôle de réseau radio (1) est configuré pour sélectionner des identificateurs de canaux, CID, dans la même direction que celle de l'appareil pair (2) ; et lorsque l'appareil de contrôle de réseau radio s'approche de l'appareil pair dans la sélection d'identificateur de canal, l'unité de comptage de canal libre (1a) compte le nombre d'identificateurs de canaux libres en consultant la mémoire d'instantané de statut d'utilisation, et l'unité d'acquisition d'identificateur de canal (1b) sélectionne un identificateur de canal libre en consultant la mémoire de statut d'utilisation.

8. Appareil de contrôle de réseau radio selon la revendication 7, dans lequel l'unité d'acquisition d'identificateur de canal (1b) est agencée pour sauter un nombre spécifié d'identificateurs de canaux libres, CID, subséquents au dernier identificateur de canal utilisé de l'appareil pair (2), avant de sélectionner un identificateur de canal libre.

**9.** Appareil de contrôle de réseau radio selon la revendication 4, 5 ou 6, dans lequel

l'appareil de contrôle de réseau radio (1) est configuré pour sélectionner des identificateurs de canaux, CID, dans la même direction que celle de l'appareil pair (2) ; et

lorsque l'appareil de contrôle de réseau radio est approché par l'appareil pair dans la sélection d'identificateur de canal, l'unité de comptage de canal libre (1a) compte le nombre d'identificateurs de canaux libres en consultant la mémoire de statut d'utilisation, et l'unité d'acquisition d'identificateur de canal (1b) sélectionne un identificateur de canal libre en consultant la mémoire de statut d'utilisation.

**10.** Appareil de contrôle de réseau radio selon la revendication 9, dans lequel l'unité d'acquisition d'identificateur de canal (1b) est agencée pour sauter un nombre spécifié d'identificateurs de canaux libres, CID, subséquents au dernier identificateur de canal utilisé de l'appareil de contrôle de réseau radio avant de sélectionner un identificateur de canal libre.

**11.** Appareil de contrôle de réseau radio selon la revendication 10, dans lequel le nombre d'identificateurs de canaux libres subséquents que l'unité d'acquisition d'identificateur de canal (1b) saute lorsque l'appareil de contrôle de réseau radio (1) est approché par l'appareil pair (2) est inférieur au nombre d'identificateurs de canaux libres, CID, subséquents que l'unité d'acquisition d'identificateur de canal saute lorsque l'appareil de contrôle de réseau radio s'approche de l'appareil pair.

**12.** Appareil de contrôle de réseau radio selon l'une quelconque des revendications 4 à 11, dans lequel l'unité de comptage de canal libre comprend :

un premier comparateur (22) qui est agencé pour compter le nombre d'identificateurs de canaux libres, CID, en consultant la mémoire de statut d'utilisation et compare le nombre résultant avec un seuil de proximité spécifié ;

un chercheur d'identificateur de canal (22), en réponse à la comparaison effectuée par le premier comparateur pour consulter la mémoire d'instantané de statut d'utilisation pour déterminer si des identificateurs de canaux libres sont disponibles à l'intérieur ; et

un second comparateur (22), en réponse à la détermination effectuée par l'unité de recherche d'identificateur de canal pour compter le nombre d'identificateurs de canaux libres en consultant la mémoire de statut d'utilisation et compare le nombre résultant avec le seuil de proximité.

**13.** Appareil de contrôle de réseau radio selon la revendication 12, dans lequel :

l'unité d'acquisition d'identificateur de canal (1b) est agencée pour sélectionner un premier identificateur de canal, CID, provisoire sur la base de résultats de comparaison du premier comparateur, sélectionner un second identificateur de canal provisoire sur la base de résultats de comparaison du second comparateur, et choisir l'un ou l'autre des premier et second identificateurs de canaux provisoires sur la base de leur comparaison avec le dernier identificateur de canal utilisé de l'appareil pair.

**14.** Procédé exécuté par un appareil de contrôle de réseau radio (1) partageant des identificateurs de canaux, CID, avec un appareil pair (2) de celui-ci pour contrôler des stations de base radio, le procédé comprenant :

le comptage du nombre d'identificateurs de canaux libres dans une plage entre un dernier identificateur de canal utilisé de l'appareil de contrôle de réseau radio et un dernier identificateur de canal utilisé de l'appareil pair ; et

la sélection d'un identificateur de canal libre, sur la base du nombre d'identificateurs de canaux libres qui est compté.

# FIG. 1

**1  RADIO NETWORK CONTROL APPARATUS**

⋮

A1 ⟶ CHANNEL ID #125: IN-USE
CHANNEL ID #126: FREE
CHANNEL ID #127: IN-USE
CHANNEL ID #128: FREE
CHANNEL ID #129: FREE
CHANNEL ID #130: IN-USE
CHANNEL ID #131: FREE
CHANNEL ID #132: IN-USE
CHANNEL ID #133: FREE
CHANNEL ID #134: FREE
CHANNEL ID #135: IN-USE
A2 ⟶ CHANNEL ID #136: IN-USE
CHANNEL ID #137: IN-USE
A3 ⟶ CHANNEL ID #138: FREE

⋮

**1a**

| FREE CHANNEL COUNTING UNIT |
|---|

**1b**

| CHANNEL IDENTIFIER ACQUIRING UNIT |
|---|

**2**

| RADIO NETWORK CONTROL APPARATUS |
|---|

# FIG. 2

CORE NETWORK — 11

UTRAN

SYSTEM OF MOBILE OPERATOR A

SYSTEM OF MOBILE OPERATOR B

12 — RNC

Iur

13 — RNC

. . .

14 — Node B   . . .   15 — Node B

16 — Node B   . . .   17 — Node B

18

# FIG. 3

**RNC**

12

MESSAGE HANDLER — 21

CID MANAGER — 22

CONFIGURATION DATA MEMORY — 23

CID MEMORY — 24

# FIG. 4

**23  CONFIGURATION DATA MEMORY**

| DIRECTION FLAG |
| FREE CID PROXIMITY THRESHOLD |

# FIG. 5

**24   CID MEMORY**

| |
|---|
| LOCAL LAST-USED CID |
| REMOTE LAST-USED CID |
| REMOTE LAST CID STATUS (CID #8) |
| REMOTE LAST CID STATUS (CID #9) |
| REMOTE LAST CID STATUS (CID #10) |
| . |
| . |
| . |
| . |
| REMOTE LAST CID STATUS (CID #254) |
| REMOTE LAST CID STATUS (CID #255) |
| LATEST CID STATUS (CID #8) |
| LATEST CID STATUS (CID #9) |
| LATEST CID STATUS (CID #10) |
| . |
| . |
| . |
| . |
| . |
| LATEST CID STATUS (CID #254) |
| LATEST CID STATUS (CID #255) |

REMOTE LAST CID
STATUS LIST
(0:FREE, 1: IN USE)

LATEST CID STATUS LIST
(0:FREE, 1: IN USE)

# FIG. 6

RNC 12                                                    RNC 13

S1

ERQ/ECF
(CID #125)

S2 ~| STORE #125 IN LOCAL
       LAST-USED CID FIELD |

S3

ERQ/ECF
(CID #136)

| STORE #136 IN REMOTE LAST-USED CID &
SAVE SNAPSHOT OF LATEST CID STATUS LIST
IN REMOTE LAST CID STATUS LIST | ~S4

S5

| NUMBER OF FREE CIDS BETWEEN
#125 AND #136 ≤ THRESHOLD n
↓
SELECT #138 FROM REMOTE LAST CID
STATUS LIST AS BEING LOWEST OF ALL CIDs
GREATER THAN REMOTE LAST-USED CID #136 | ~ S6

ERQ/ECF
(CID #138)                    ERQ/ECF
                              (CID #134)

ERQ/ECF
(CID #139)                    ERQ/ECF
                              (CID #133)

# FIG. 7

⋮

→ CID #125: IN-USE
CID #126: FREE
CID #127: IN-USE
CID #128: FREE
CID #129: FREE
CID #130: IN-USE
CID #131: FREE
CID #132: IN-USE
CID #133: FREE
CID #134: FREE
CID #135: IN-USE
⋯▶ CID #136: IN-USE
CID #137: IN-USE
CID #138: FREE

⋮

# FIG. 8

RNC 12          RNC 13

S11

ERQ/ECF
(CID #244)

S12 — STORE #244 IN LOCAL
LAST-USED CID FIELD

ERQ/ECF    S13
(CID #253)

STORE #253 IN REMOTE LAST-USED CID &
SAVE SNAPSHOT OF LATEST CID STATUS LIST   S14
IN REMOTE LAST CID STATUS LIST

REL/RLC    S15
(CID #254)

S16

NUMBER OF FREE CIDS BETWEEN
#244 AND #253 ≦ THRESHOLD n
↓
SELECT #9 FROM REMOTE LAST CID   S17
STATUS LIST AS BEING LOWEST OF ALL CIDs
GREATER THAN REMOTE LAST-USED CID #253

ERQ/ECF        ERQ/ECF
(CID #9)        (CID #254)

ERQ/ECF        ERQ/ECF
(CID #10)       (CID #252)

# FIG. 9

$\vdots$

→ CID #244: IN-USE
CID #245: FREE
CID #246: FREE
CID #247: IN-USE
CID #248: FREE
CID #249: FREE
CID #250: IN-USE
CID #251: FREE
CID #252: FREE
····▶ CID #253: IN-USE
CID #254: FREE
CID #255: IN-USE
CID #8: IN-USE
CID #9: FREE

$\vdots$

# FIG. 10

START

S21

RECEIVE ERQ MESSAGE

S22

CID IN USE? — Yes → S23 SEND IN-USE STATUS

No

S24 UPDATE LATEST CID STATUS LIST

S25 STORE SPECIFIED CID IN REMOTE LAST-USED CID FIELD & SAVE SNAPSHOT OF LATEST CID STATUS LIST IN REMOTE LAST CID STATUS LIST

S26 SEND ACKNOWLEDGMENT

S27 SEND MESSAGE

END

# FIG. 11

START

S31
FIND TRIGGER EVENT

S32
REQUEST NEW CID

S33
x = NUMBER OF FREE CIDs

S34
x> THRESHOLD?

Yes

S35
SELECT FREE CID FROM LATEST CID STATUS LIST

No

S36
SELECT FREE CID FROM REMOTE LAST CID STATUS LIST

S37
PASS CID TO MESSAGE TRANSCEIVER

S38
TRANSMIT CID TO RNC

END

# FIG. 12

```
        RNC 12                              RNC 13

                                                    ○⌇S41
                                            ERQ/ECF
                                            (CID #126)

  ┌─────────────────────────────────────┐
  │ STORE #126 IN REMOTE LAST-USED CID & │
  │ SAVE SNAPSHOT OF LATEST CID STATUS LIST │⌇S42
  │   IN REMOTE LAST CID STATUS LIST     │
  └─────────────────────────────────────┘

                ○⌇S43
                    ERQ/ECF
                    (CID #125)

      ┌──────────────────────┐
      │  STORE #125 IN LOCAL  │⌇S44
      │  LAST-USED CID FIELD  │
      └──────────────────────┘

                ○⌇S45
  ┌─────────────────────────────────────┐
  │         NO FREE CIDS IN RANGE        │
  │       BETWEEN #125 AND #126          │
  │                 ↓                    │⌇S46
  │ SKIP 2xn FREE CIDs & SELECT #144 AS BEING │
  │ LOWEST OF ALL SUBSEQUENT CIDs GREATER │
  │ THAN REMOTE LAST-USED CID #126       │
  └─────────────────────────────────────┘

        ERQ/ECF            ERQ/ECF
        (CID #144)         (CID #128)


        ERQ/ECF            ERQ/ECF
        (CID #145)         (CID #129)
```

# FIG. 13

⋮

→ CID #125: FREE
⋯▶ CID #126: IN-USE
CID #127: IN-USE
CID #128: FREE
CID #129: FREE
CID #130: IN-USE
CID #131: FREE
CID #132: IN-USE
CID #133: FREE
CID #134: FREE
CID #135: IN-USE
CID #136: FREE
CID #137: IN-USE
CID #138: FREE
CID #139: FREE
CID #140: FREE
CID #141: FREE
CID #142: FREE
CID #143: FREE
CID #144: FREE
CID #145: FREE
CID #146: FREE

⋮

# FIG. 14

RNC 12

RNC 13

○~S51

ERQ/ECF
(CID #136)

STORE #136 IN LOCAL
LAST-USED CID FIELD  ~ S52

○~S53

ERQ/ECF
(CID #126)

STORE #126 IN REMOTE LAST-USED CID &
SAVE SNAPSHOT OF LATEST CID STATUS LIST
IN REMOTE LAST CID STATUS LIST  ~S54

○~S55

NUMBER OF FREE CIDS BETWEEN
#126 AND #136 ≤ THRESHOLD n
↓
SKIP n FREE CIDs & SELECT #144 AS BEING
LOWEST OF ALL SUBSEQUENT FREE CIDs
GREATER THAN LOCAL LAST-USED CID #136  ~ S56

ERQ/ECF
(CID #144)

ERQ/ECF
(CID #128)

ERQ/ECF
(CID #145)

ERQ/ECF
(CID #129)

# FIG. 15

⋮

CID #125: IN-USE
----▶ CID #126: IN-USE
CID #127: IN-USE
CID #128: FREE
CID #129: FREE
CID #130: IN-USE
CID #131: FREE
CID #132: IN-USE
CID #133: FREE
CID #134: FREE
CID #135: IN-USE
——▶ CID #136: IN-USE
CID #137: IN-USE
CID #138: FREE
CID #139: FREE
CID #140: FREE
CID #141: FREE
CID #142: FREE
CID #143: FREE
CID #144: FREE
CID #145: FREE
CID #146: FREE

⋮

## FIG. 16

RNC 12

RNC 13

S61

ERQ/ECF
(CID #254)

STORE #254 IN LOCAL
LAST-USED CID FIELD    S62

S63

ERQ/ECF
(CID #12)

STORE #12 IN REMOTE LAST-USED CID &
SAVE SNAPSHOT OF LATEST CID STATUS LIST    S64
IN REMOTE LAST CID STATUS LIST

REL/RLC    S65
(CID #9)

S66

NO FREE CIDS IN RANGE
BETWEEN #254 AND #12
↓
SKIP 2xn FREE CIDs & SELECT #26 AS BEING    S67
LOWEST OF ALL SUBSEQUENT CIDs GREATER
THAN REMOTE LAST-USED CID #126

ERQ/ECF
(CID #26)

ERQ/ECF
(CID #10)

ERQ/ECF
(CID #27)

ERQ/ECF
(CID #11)

# FIG. 17

⋮

CID #253: IN-USE
→ CID #254: IN-USE
CID #255: IN-USE
CID #8: IN-USE
CID #9: IN-USE
CID #10: IN-USE
CID #11: IN-USE
--→ CID #12: IN-USE
CID #13: FREE
CID #14: FREE
CID #15: IN-USE
CID #16: FREE
CID #17: FREE
CID #18: FREE
CID #19: FREE
CID #20: FREE
CID #21: FREE
CID #22: FREE
CID #23: FREE
CID #24: FREE
CID #25: FREE
CID #26: FREE

⋮

# FIG. 18

**RNC 12**  **RNC 13**

S71

ERQ/ECF
(CID #20)

STORE #20 IN LOCAL
LAST-USED CID FIELD — S72

S73

ERQ/ECF
(CID #12)

STORE #12 IN REMOTE LAST-USED CID & SAVE
SNAPSHOT OF LATEST CID STATUS LIST
IN REMOTE LAST CID STATUS LIST — S74

S75

NUMBER OF FREE CIDS BETWEEN
#12 AND #20 ≦ THRESHOLD n
↓
SKIP n FREE CIDs & SELECT #27 AS BEING
LOWEST OF ALL SUBSEQUENT FREE CIDs
GREATER THAN LOCAL LAST-USED CID #20 — S76

ERQ/ECF
(CID #27)

ERQ/ECF
(CID #13)

ERQ/ECF
(CID #28)

ERQ/ECF
(CID #14)

# FIG. 19

⋮

CID #8: IN-USE
CID #9: IN-USE
CID #10: IN-USE
CID #11: IN-USE
----► CID #12: IN-USE
CID #13: FREE
CID #14: IN-USE
CID #15: FREE
CID #16: FREE
CID #17: FREE
CID #18: FREE
CID #19: IN-USE
——► CID #20: IN-USE
CID #21: FREE
CID #22: FREE
CID #23: FREE
CID #24: FREE
CID #25: FREE
CID #26: FREE
CID #27: FREE
CID #28: FREE
CID #29: FREE

⋮

# FIG. 20

START

↓ S81

FIND TRIGGER EVENT

↓ S82

REQUEST NEW CID

↓ S83

x = NUMBER OF FREE CIDs

↓ S84

x=0? — Yes → S85 SKIP TWICE AS MANY CIDs AS THRESHOLD & SELECT FREE CID

No ↓ S86

y = NUMBER OF FREE CIDs

↓ S87

y<THRESHOLD? — Yes → S88 SKIP AS MANY CIDs AS THRESHOLD & SELECT FREE CID

No ↓ S89

SELECT CID USING ASCENDING ROUND ROBIN ALGORITHM

↓ S90

PASS CID TO MESSAGE TRANSCEIVER

↓ S91

TRANSMIT CID TO RNC

↓

END

# FIG. 21

START

S101
FIND TRIGGER EVENT

S102
REQUEST NEW CID

S103
x = NUMBER OF FREE CIDs

S104
$x \leqq$ THRESHOLD? —Yes→ 

S105
SELECT PROVISIONAL CID FROM REMOTE LAST CID STATUS LIST

No

S106
y = NUMBER OF FREE CIDs

S107
y=0? —Yes→

S108
SKIP TWICE AS MANY FREE CIDs AS THRESHOLD & SELECT PROVISIONAL CID

No

S109
$x \leqq$ THRESHOLD or y=0 —Yes→

S110
DETERMINE DEFINITIVE CID

No

① ②

# FIG. 22

①

② 

**S111**

z = NUMBER OF FREE CIDs

**S112**

z< THRESHOLD?

Yes → **S113**

SKIP AS MANY FREE CIDs
AS THRESHOLD &
SELECT PROVISIONAL CID

No

**S114**

SELECT CID USING
ASCENDING ROUND ROBIN
ALGORITHM

**S115**

PASS CID TO MESSAGE
TRANSCEIVER

**S116**

TRANSMIT CID TO RNC

END

# FIG. 23

**EP 2 152 037 B1**

**REFERENCES CITED IN THE DESCRIPTION**

**Patent documents cited in the description**

- JP 6141086 A
- JP 6315035315035 B

- JP 2007243312 A